(19) Europäisches Patentamt
European Patent Office
Office européen des brevets

(11) EP 0 779 306 B1

(12) **EUROPÄISCHE PATENTSCHRIFT**

(45) Veröffentlichungstag und Bekanntmachung des Hinweises auf die Patenterteilung:
**03.12.2003 Patentblatt 2003/49**

(51) Int Cl.⁷: **C08F 232/00**, C08F 210/00

(21) Anmeldenummer: **96119751.4**

(22) Anmeldetag: **10.12.1996**

# (54) Verfahren zur Herstellung eines Cycloolefincopolymeren

Process for preparation of cycloolefin copolymers

Procédé de préparation de copolymères de cyclooléfines

(84) Benannte Vertragsstaaten:
**DE FR GB IT NL**

(30) Priorität: **13.12.1995 DE 19546500**

(43) Veröffentlichungstag der Anmeldung:
**18.06.1997 Patentblatt 1997/25**

(73) Patentinhaber:
- **Ticona GmbH
65451 Kelsterbach (DE)**
- **Mitsui Petrochemical Industries, Ltd.
Tokyo (JP)**

(72) Erfinder:
- **Riedel, Michael, Dr.
45130 Essen (DE)**
- **Weller, Thomas, Dr.
55130 Mainz (DE)**
- **Jacobs, Alexandra, Dr.
65931 Frankfurt (DE)**

(56) Entgegenhaltungen:
**EP-A- 0 659 758**
**WO-A-95/32979**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 779 306 B1

## Beschreibung

Die vorliegende Erfindung bezieht sich auf ein Verfahren zur Herstellung eines Cycloolefincopolymeren in Gegenwart einer Metallocenverbindung.

Metallocenverbindungen der 4. Nebengruppe des Periodensystems der Elemente sind in Kombination mit Methylaluminoxan (MAO) aktive Katalysatoren für die Polymerisation von Olefinen. Aus der Literatur ist die Herstellung von Polyolefinen mit löslichen Metallocenverbindungen in Kombination mit Aluminoxanen oder anderen Cokatalysatoren, die aufgrund ihrer Lewis-Acidität das neutrale Metallocen in eine Kation überführen und stabilisieren können, bekannt (EP-A-129 368).

Metallocene und Halbsandwichkomplexe sind nicht nur hinsichtlich der Polymerisation oder Oligomerisation von Olefinen von großem Interesse. Sie können auch als Hydrier-, Epoxidations-, Isomerisierungs-, C-C-Kupplungskatalysatoren eingesetzt werden (Chem. Rev. 1992, 92, 965-994).

Aus der Literatur ist bekannt, daß man CpH mit Zirkonium- oder Hafniumdimethyltetraamid direkt und ohne Zusatz einer Base zu Metallocenen der in EP-A-595 390 und EP-A-283 164 beschriebenen Typen umsetzen kann (J. Chem. Soc. (A), 1968, 1940-1945). Weiterhin ist bekannt, Cycloolefincopolymere in Gegenwart verbrückter Metallocene herzustellen (EP-A-283 164, EP-A-407 870).

EP 0659758 bezieht sich auf eine stereorigide Metallocenverbindung, die als Liganden mindestens zwei substituierte oder unsubstituierte Cyclopendadienylgruppen aufweist, die über ein mono- oder polycyclisches Ringsystem miteinander verbunden sind, wobei mindestens eine Cyclopentadienylgruppe an das mono- oder polycyclische Ringsystem anelliert ist und ein Verfahren zur Herstellung eines Cycloolefincopolymers. Die so erhaltenen Cycloolefincopolymere weisen hohe Reißfestigkeiten auf und eignen sich zur Herstellung von Extrusionsteilen und Spritzgußartikeln.

Es bestand die Aufgabe, ein wirtschaftliches Verfahren zur Herstellung von Cycloolefincopolymeren zur Verfügung zu stellen. Diese Aufgabe wird durch die vorliegende Erfindung gelöst.

Die vorliegende Erfindung betrifft somit ein Verfahren zur Herstellung eines Cycloolefincopolymeren durch Polymerisation mindestens eines cyclischen Olefins und mindestens eines acyclischen Olefins, in Gegenwart eines Katalysators enthaltend mindestens eine Metallocenverbindung der Formel I,

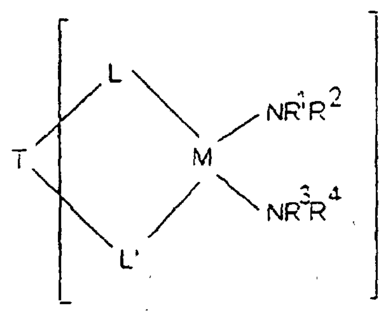

(I)

worin L und L' eine substituierte oder unsubstituierte Cyclopentadienylgruppe ist, T eine Verbrückung zwischen L und L' ist, und $[R^5R^6X]_n$ bedeutet, worin X unabhängig voneinander gleich oder verschieden Kohlenstoff, Silizium, Germanium oder Zinn sind, die Reste $R^5$ und $R^6$ unabhängig voneinander ein Wasserstoffatom oder einen $C_1$-$C_{30}$-Kohlenwasserstoffrest bedeuten, und n gleich 1, 2, 3 oder 4 bedeutet, M ein vierwertiges Übergangsmetall ist, und $R^1$, $R^2$, $R^3$ und $R^4$ unabhängig voneinander gleich oder verschieden ein Wasserstoffatom oder ein $C_1$-$C_{20}$-Kohlenwasserstoffrest ist.

M ist gleich Titan, Zirkonium oder Hafnium. Vorteilhaft bedeuten $R^5$ und $R^6$ ein Wasserstoffatom, $C_1$-$C_{20}$-Alkyl oder $C_6$-$C_{20}$-Aryl, und n ist bevorzugt 1 oder 2. Für n = 2 bedeutet T bevorzugt Kohlenstoff, Silizium, Germanium oder Zinn.

$R^1$ und $R^3$ sind unabhängig voneinander gleich oder verschieden ein Wasserstoffatom oder ein $C_1$-$C_{20}$-Kohlenwasserstoffrest, bevorzugt ein $C_1$-$C_{20}$-Kohlenwasserstoffrest wie $C_1$-$C_{20}$-Alkyl oder $C_6$-$C_{14}$-Aryl, insbesondere Methyl.

$R^2$ und $R^4$ sind unabhängig voneinander gleich oder verschieden und bevorzugt ein $C_1$-$C_{20}$-Kohlenwasserstoffrest wie $C_1$-$C_{20}$-Alkyl oder $C_6$-$C_{14}$-Aryl, insbesondere Methyl.

Die Reste $R^1$, $R^2$, $R^3$ und $R^4$ sind unabhängig voneinander gleich oder verschieden. Bevorzugt sind die Reste $R^1$, $R^2$, $R^3$ und $R^4$ gleich und ein $C_1$-$C_{20}$-Alkyl oder $C_6$-$C_{14}$-Aryl, insbesondere Methyl.

Beispiele für substituierte Cyclopentadienylgruppen L oder L' sind:

Tetramethylcyclopentadienyl, Methylcyclopentadienyl,
Methyl-tert.-butylcyclopentadienyl, Tert.-butylcyclopentadienyl,
Isopropylcyclopentadienyl, Dimethylcyclopentadienyl,
Trimethylcyclopentadienyl, Trimethylethylcyclopentadienyl,
Phenylcyclopentadienyl, Diphenylcyclopentadienyl, Indenyl, 2-Methylindenyl,
2-Ethylindenyl, 3-Methylindenyl, 3-tert.-butylindenyl, 3-Trimethylsilylindenyl,
2-Methyl-4-phenylindenyl, 2-Ethyl-4-phenylindenyl,
2-Methyl-4-naphthyl-indenyl, 2-Methyl-4-isopropyl-indenyl, 4,5-Benzoindenyl,
2-Methyl-4,5-benzoindenyl, 2-Methyl-α-acenaphthindenyl,
2-Methyl-4,6-diisopropylindenyl, Fluorenyl, 4-Methylfluorenyl oder
2,7-Di-tert.-butylfluorenyl.

Beispiele für Verbrückungen T sind:

Dimethylsilandiyl, Methylphenylsilandiyl, Diphenylsilandiyl, Dimethylgermandiyl,
1,2-Tetramethyldisilandiyl, 1,2-Ethyliden, 1,2-Propyliden, 1,2-Butyliden,
1,3-Propyliden, 1,4-Butyliden oder 2,2-Propyliden.

Beispiele für Metallocenverbindungen der Formel I sind:

Bis(dimethylamido)[$\eta^5$:$\eta^5$-2,2-(cyclopentadienyl)(indenyl)propyliden)}-zirkonium
Bis(dimethylamido)[$\eta^5$:$\eta^5$-2,2-(cyclopentadienyl)(indenyl)propyliden)]-hafnium
Bis(dimethylamido)[$\eta^5$:$\eta^5$-2,2-(cyclopentadienyl)(fluorenyl)propyliden)]-zirkonium
Bis(dimethylamido)[$\eta^5$:$\eta^5$-2,2-(cyclopentadienyl)(fluorenyl)propyliden)]-hafnium
Bis(dimethylamido)[$\eta^5$:$\eta^5$-2,2-(fluorenyl)(indenyl)propyliden)]-zirkonium
Bis(dimethylamido)[$\eta^5$:$\eta^5$-2,2-(fluorenyl)(indenyl)propyliden)]-hafnium
Bis(dimethylamido)[$\eta^5$:$\eta^5$-2,2-(methylcyclopentadienyl)(indenyl)propyliden)]-zirkonium
Bis(dimethylamido)[$\eta^5$:$\eta^5$-2,2-(methylcyclopentadienyl)(fluorenyl)propyliden)]-zirkonium
Bis(dimethylamido)[$\eta^5$:$\eta^5$-2,2-(fluorenyl)(2-methyl-indenyl)propyliden)]-zirkonium
Bis(dimethylamido)[$\eta^5$:$\eta h^5$-2,2-(tetramethylcyclopentadienyl)(indenyl)propyliden)]-zirkonium
Bis(dimethylamido)[$\eta^5$:$\eta^5$-2,2-(tetramethylcyclopentadienyl)(fluorenyl)propyliden)]-zirkonium
Bis(dimethylamido)[$\eta^5$:$\eta^5$-2,2-(fluorenyl)(2-ethyl-indenyl)propyliden)]-zirkonium
Bis(dimethylamido)[$\eta^5$:$\eta^5$-2,2-(cyclopentadienyl)(2-methyl-indenyl)propyliden)]-zirkonium
Bis(dimethylamido)[$\eta^5$:$\eta^5$-2,2-(cyclopentadienyl)(2-ethyl-indenyl)propyliden)]-zirkonium
Bis(dimethylamido)[$\eta^5$:$\eta^5$-2,2-(cyclopentadienyl)(3-trimethylsilyl-indenyl)-propyliden)]-zirkonium
Bis(dimethylamido)[$\eta^5$:$\eta^5$-2,2-(methylcyclopentadienyl)(2-methyl-indenyl)-propylinden)]-zirkonium
Bis(dimethylamido)[$\eta^5$:$\eta^5$-2,2-(methylcyclopentadienyl)(2-ethyl-indenyl)-propyliden)]-zirkonium
Bis(dimethylamido)[$\eta^5$:$\eta^5$-2,2-(methylcyclopentadienyl)(3-trimethylsilyl-indenyl)-propyliden)]-zirkonium
Bis(dimethylamido)[dimethylsilandiyl($\eta^5$:$\eta^5$-(cyclopentadienyl)(indenyl)]-zirkonium
Bis(dimethylamido)[dimethylsilandiyl($\eta^5$:$\eta^5$-(cyclopentadienyl)(indenyl)]-zirkonium
Bis(dimethylamido)[dimethylsilandiyl($\eta^5$:$\eta^5$-(fluorenyl)(indenyl)]-zirkonium
Bis(dimethylamido)[dimethylsilandiyl($\eta^5$:$\eta^5$-2,2-(methylcyclopentadienyl) (indenyl))]-zirkonium
Bis(dimethylamido)[dimethylsilandiyl($\eta^5$:$\eta^5$-2,2-(methylcyclopentadienyl)(fluorenyl))]-zirkonium
Bis(dimethylamido)[dimethylsilandiyl($\eta^5$:$\eta^5$-2,2-(fluorenyl)(2-methyl-indenyl))]-zirkonium
Bis(dimethylamido)[dimethylsilandiyl($\eta^5$:$\eta^5$-2,2-(tetramethylcyclopentadienyl)(indenyl))]-zirkonium
Bis(dimethylamido)[dimethylsilandiyl($\eta^5$:$\eta^5$-2,2-(tetramethylcyclopentadienyl)(fluorenyl))]-zirkonium
Bis(dimethylamido)[dimethylsilandiyl($\eta^5$:$\eta^5$-2,2-(fluorenyl)(2-ethyl-indenyl))]-zirkonium
Bis(dimethylamido)[dimethylsilandiyl($\eta^5$:$\eta^5$-2,2-(cyclopentadienyl)(2-methylindenyl))]-zirkunium
Bis(dimethylamido)[dimethylsilandiyl($\eta^5$:$\eta^5$-2,2-(cyclopentadienyl)(2-ethylindenyl))]-zirkonium
Bis(dimethylamido)[dimethylsilandiyl($\eta^5$:$\eta^5$-2,2-(cyclopentadienyl)(3-trimethylsilyl-indenyl))]-zirkonium
Bis(dimethylamido)[dimethylsilandiyl($\eta^5$:$\eta^5$-2,2-(methylcyclopentadienyl)(2-methyl-indenyl))]-zirkonium
Bis(dimethylamido)[dimethylsilandiyl($\eta^5$:$\eta^5$-2,2-(methylcyclopentadienyl)(2-ethylindenyl))]-zirkonium
Bis(dimethylamido)[dimethylsilandiyl($\eta^5$:$\eta^5$-2,2-(methylcyclopentadienyl)(3-trimethylsilyl-indenyl))]-zirkonium
Stantetraylbis[($\eta^5$:$\eta^5$-bis(cyclopentadienyl)]zirkoniumbis(dimethylamido)

Als bevorzugte Form der Metallocenverbindung der Formel (I) wird in dem erfindungsgemäßen Verfahren eine Metallocenverbindung der Formel (II) eingesetzt erfindungsgemäßen Verfahren eine Metallocenverbindung der Formel (II) eingesetzt

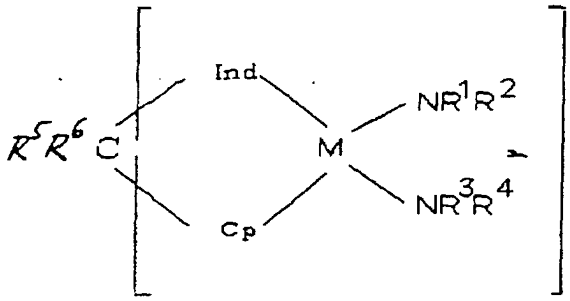 (II)

worin Cp eine unsubstituierte oder substituierte Cyclopentadienylgruppe bedeutet, Ind unsubstituiertes oder substituiertes Indenyl bedeutet, M ein vierwertiges Übergangsmetall bedeutet, $R^1$, $R^2$, $R^3$ und $R^4$ unabhängig voneinander gleich oder verschieden sind und ein Wasserstoffatom oder ein $C_1$-$C_{20}$-Kohlenwasserstoffrest bedeuten, $R^5$ und $R^6$ unabhängig voneinander gleich oder verschieden sind und ein Wasserstoffatom oder einen $C_1$-$C_{30}$-Kohlenwasserstoffrest bedeuten.

In Formel II ist M gleich Titan, Zirkonium oder Hafnium.

Cp ist eine unsubstituierte oder substituierte Cyclopentadienylgruppe. Beispiele für substituierte Cyclopentadienylgruppen Cp sind:

Tetramethylcyclopentadienyl, Methylcyclopentadienyl,
Methyl-tert.-butylcyclopentadienyl, Tert.-butylcyclopentadienyl,
Isopropylcyclopentadienyl, Dimethylcyclopentadienyl,
Trimethylcyclopentadienyl, Trimethylethylcyclopentadienyl,
Phenylcyclopentadienyl, Diphenylcyclopentadienyl, Indenyl, 2-Methylindenyl,
2-Ethylindenyl, 3-Methylindenyl, 3-tert.-butylindenyl, 3-Trimethylsilylindenyl,
2-Methyl-4-phenylindenyl, 2-Ethyl-4-phenylindenyl,
2-Methyl-4,6-diisopropylindenyl, Fluorenyl, 4-Methylfluorenyl oder
2,7-Di-tert.-butylfluorenyl.

Ind ist unsubstituiertes oder substituiertes Indenyl. Beispiele für substituiertes Indenyl sind: 2-Methylindenyl, 2-Ethylindenyl, 3-Methylindenyl, 3-tert.-butylindenyl, 3-Trimethylsilylindenyl, 2-Methyl-4-phenylindenyl, 2-Ethyl-4-phenylindenyl, 2-Methyl-4-naphthyl-indenyl, 2-Methyl-4-isopropyl-indenyl, 4,5-benzoindenyl, 2-Methyl-4,5-benzoindenyl, 2-Methyl-$\alpha$-acenaphthindenyl, 2-Methyl-4,6-diisopropylindenyl. Bevorzugt bedeutet Ind unsubstituiertes Indenyl.

Die Reste $R^5$ und $R^6$ sind unabhängig voneinander gleich oder verschieden, bevorzugt gleich, und ein Wasserstoffatom oder ein $C_1$-$C_{30}$-Kohlenwasserstoffrest wie $C_1$-$C_{20}$-Alkyl oder $C_6$-$C_{20}$-Aryl. Bevorzugt sind $R^5$ und $R^6$ Methyl oder Phenyl, insbesondere Methyl.

$R^1$ und $R^3$ sind unabhängig voneinander gleich oder verschieden ein Wasserstoffatom oder ein $C_1$-$C_{20}$-Kohlenwasserstoffrest, bevorzugt ein $C_1$-$C_{20}$-Kohlenwasserstoffrest, wie $C_1$-$C_{20}$-Alkyl oder $C_6$-$C_{14}$-Aryl, insbesondere Methyl.

$R^2$ und $R^4$ sind unabhängig voneinander gleich oder verschieden und bevorzugt ein $C_1$-$C_{20}$-Kohlenwasserstoffrest wie $C_1$-$C_{20}$-Alkyl oder $C_6$-$C_{14}$-Aryl, insbesondere Methyl.

Die Reste $R^1$, $R^2$, $R^3$ und $R^4$ sind unabhängig voneinander gleich oder verschieden. Bevorzugt sind die Reste $R^1$, $R^2$, $R^3$ und $R^4$ gleich und ein $C_1$-$C_{20}$-Kohlenwasserstoffrest wie $C_1$-$C_{20}$-Alkyl ode r$C_6$-$C_{14}$-Aryl, insbesondere Methyl.

Beispiele für Metallocenverbindungen der Formel II sind:

Bis(dimethylamido)[$\eta^5$:$\eta^5$-2,2-(cyclopentadienyl)(indenyl)propyliden)]-zirkonium
Bis(dimethylamido)[$\eta^5$:$\eta^5$-2,2-(cyclopentadienyl)(indenyl)propyliden)]-hafnium
Bis(dimethylamido)[$\eta^5$:$\eta^5$-2,2-(fluorenyl)(indenyl)propyliden)]-zirkonium
Bis(dimethylamido)[$\eta^5$:$\eta^5$-2,2-(fluorenyl)(indenyl)propyliden)]-hafnium
Bis(dimethylamido)[$\eta^5$:$\eta^5$-2,2-(methylcyclopentadienyl)(indenyl)propyliden)]-zirkonium
Bis(dimethylamido)($\eta^5$:$\eta^5$-2,2-(fluorenyl)(2-methyl-indenyl)propyliden)]-zirkonium
Bis(dimethylamido)[$\eta^5$:$\eta h^5$-2,2-(tetramethylcyclopentadienyl)(indenyl)propyliden)]-zirkonium
Bis(dimethylamido)[$\eta^5$:$\eta^5$-2,2-(fluorenyl)(2-ethyl-indenyl)propyliden)]-zirkonium
Bis(dimethylamido)[$\eta^5$:$\eta^5$-2,2-(cyclopentadienyl)(2-methyl-indenyl)propyliden)]-zirkonium

Bis(dimethylamido)[$\eta^5$:$\eta^5$-2,2-(cyclopentadienyl)(2-ethyl-indenyl)propyliden)]-zirkonium
Bis(dimethylamido)($\eta^5$:$\eta^5$-2,2-(cyclopentadienyl)(3-trimethylsilyl-indenyl)propyliden)]-zirkonium
Bis(dimethylamido)[$\eta^5$:$\eta^5$-2,2-(methylcyclopentadienyl)(2-methyl-indenyl)propyliden)]-zirkonium
Bis(dimethylamido)[$\eta^5$:$\eta^5$-2,2-(methylcyclopentadienyl)(2-ethyl-indenyl)propyliden)]-zirkonium
Bis(dimethylamido)[$\eta^5$:$\eta^5$-2,2-(methylcyclopentadienyl)(3-trimethylsilyl-indenyl)propyliden)]-zirkonium
Bis(dimethylamido)[$\eta^5$:$\eta^5$-2,2-(2-methyl-indenyl)-(indenyl)-propyliden)]-zirkonium
Bis(dimethylamido)[$\eta^5$:$\eta^5$-2,2-bis(indenyl)-propyliden)]-zirkonium.

Die Metallocenverbindung der Formel I oder II kann hergestellt werden durch Umsetzung einer Verbindung der Formel III, worin L ein $\pi$-Ligand, L' ein $\pi$-Ligand, T eine Verbrückung und m gleich 1 oder 2 ist, mit einer Verbindung der Formel IV, worin M ein vierwertiges Metall ist, und $R^1$, $R^2$, $R^3$ und $R^4$ unabhängig voneinander gleich oder verschieden ein Wasserstoffatom oder einen $C_1$-$C_{20}$-Kohlenwasserstoffrest bedeuten

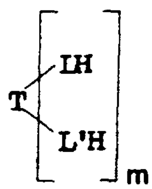

$$M(NR^1_2NR^2_2NR^3_2NR^4_2)$$

(III) (IV)

Die Reaktion wird bevorzugt in einem aprotischen Lösungsmittel, z.B. Toluol oder Hexan durchgeführt. Die Temperatur kann zwischen -78 und 140°C betragen, bevorzugt 0°C bis 110°C. Die Verbindung der Formel III kann im Überschuß eingesetzt werden, bevorzugt werden 1 Äquivalent der Verbindung der Formel III und 1 Äquivalent des Metalltetramids der Formel IV verwendet.

Verfahren zur Herstellung von Verbindungen der allgemeinen Formel III sind bekannt (Chem. Ber. 1990, 123, 1649-1651). Verfahren zur Herstellung von Verbindungen der allgemeinen Formel IV sind ebenfalls bekannt (J. Chem. Soc. 1960, 3857-3861).

Bevorzugt wird in dem erfindungsgemäßen Verfahren ein Katalysator eingesetzt, der mindestens eine Metallocenverbindung der Formel I und mindestens einen Cokatalysator enthält. Es können auch Mischungen von zwei oder mehr Metallocenverbindungen verwendet werden, insbesondere zur Herstellung von Reaktorblends oder von Cycloolefincopolymeren mit breiter oder multimodaler Molmassenverteilung.

Prinzipiell ist als Cokatalysator in dem erfindungsgemäßen Verfahren jede Verbindung geeignet, die aufgrund ihrer Lewis-Acidität die neutrale Metallocenverbindung in ein Kation überführen und dieses stabilisieren kann ("labile Koordination"). Darüber hinaus soll der Cokatalysator oder das aus ihm gebildete Anion keine weiteren Reaktionen mit dem gebildeten Kation eingehen (EP-A-427 697). Als Cokatalysator wird bevorzugt eine Aluminiumverbindung und/oder eine Borverbindung verwendet.

Die Borverbindung hat bevorzugt die Formel $R^a_xNH_{4-x}BR^b_4$, $R^a_xPH_{4-x}BR^b_4$, $R^a_3CBR^b_4$ oder $BR^b_3$, worin x eine Zahl von 1 bis 4, bevorzugt 3, bedeutet, die Reste $R^a$ gleich oder verschieden, bevorzugt gleich sind, und $C_1$-$C_{10}$-Alkyl oder $C_6$-$C_{18}$-Aryl sind, oder zwei Reste $R^a$ zusammen mit dem sie verbindenden Atomen einen Ring bilden, und die Reste $R^b$ gleich oder verschieden, bevorzugt gleich sind, und $C_6$-$C_{18}$-Aryl sind, das durch Alkyl, Haloalkyl oder Fluor substituiert sein kann. Insbesondere steht $R^a$ für Ethyl, Propyl, Butyl oder Phenyl und $R^b$ für Phenyl, Pentafluorphenyl, 3,5-Bistrifluormethylphenyl, Mesityl, Xylyl oder Tolyl (EP-A-277 003, EP-A-277 004 und EP-A-426 638).

Bevorzugt wird als Cokatalysator eine Aluminiumverbindung wie Aluminoxan und/oder ein Aluminiumalkyl eingesetzt.

Besonders bevorzugt wird als Cokatalysator ein Aluminoxan, insbesondere der Formel Va für den linearen Typ und/oder der Formel Vb für den cyclischen Typ verwendet,

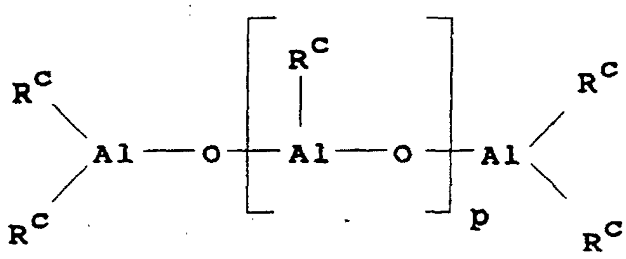

(Va)

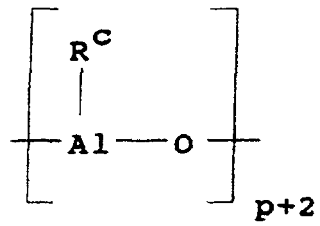

(Vb)

wobei in den Formeln Va und Vb die Reste $R^c$ gleich oder verschieden sind und Wasserstoff oder eine $C_1$-$C_{20}$-Kohlenwasserstoffgruppe wie eine $C_1$-$C_{18}$-Alkylgruppe, eine $C_6$-$C_{18}$-Arylgruppe oder Benzyl bedeuten und p eine ganze Zahl von 2 bis 50, bevorzugt 10 bis 35 bedeutet.

Bevorzugt sind die Reste $R^c$ gleich und bedeuten Wasserstoff, Methyl, Isobutyl, Phenyl oder Benzyl, besonders bevorzugt Methyl.

Sind die Reste $R^c$ verschieden, so sind sie bevorzugt Methyl und Wasserstoff oder alternativ Methyl und Isobutyl, wobei Wasserstoff oder Isobutyl bevorzugt in einem zahlenmäßigen Anteil von 0,01 bis 40 % (der Reste $R^c$) enthalten sind.

Die Verfahren zur Herstellung der Aluminoxane sind bekannt. Die genaue räumliche Struktur der Aluminoxane ist nicht bekannt (J. Am. Chem. Soc. (1993) 115, 4971). Beispielsweise ist denkbar, daß sich Ketten und Ringe zu größeren zweidimensionalen oder dreidimensionalen Strukturen verbinden.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist möglich, die Metallocenverbindung vor dem Einsatz in der Polymerisationsreaktion mit einem Cokatalysator, insbesondere einem Aluminoxan vorzuaktivieren. Dadurch wird die Polymerisationsaktivität deutlich erhöht. Die Voraktivierung der Metallocenverbindung wird vorzugsweise in Lösung vorgenommen. Bevorzugt wird dabei die Metallocenverbindung in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösungsmenge. Die Metallocenverbindung kann in der gleichen Konzentration eingesetzt werden, vorzugsweise wird es jedoch in einer Menge von $10^{-4}$ bis 1 mol pro mol Aluminoxan eingesetzt. Die Voraktivierungsdauer beträgt 5 Minuten bis 60 Stunden, vorzugsweise 5 bis 60 Minuten. Man arbeitet bei einer Temperatur von -78 bis 150°C, vorzugsweise 0 bis 80°C.

Die Metallocenverbindung wird bevorzugt in einer Konzentration, bezogen auf das Übergangsmetall, von $10^{-3}$ bis $10^{-8}$, vorzugsweise $10^{-4}$ bis $10^{-7}$ mol Übergangsmetall pro $dm^3$ Lösemittel bzw. pro $dm^3$ Reaktorvolumen angewendet. Das Aluminoxan, wird bevorzugt in einer Konzentration von $10^{-6}$ bis $10^{-1}$ mol, vorzugsweise $10^{-5}$ bis $10^{-2}$ mol pro $dm^3$ Lösemittel bzw. pro $dm^3$ Reaktorvolumen verwendet. Die anderen genannten Cokatalysatoren werden in etwa äquimolaren Mengen zu der Metallocenverbindung verwendet. Prinzipiell sind aber auch höhere Konzentrationen möglich.

Das Aluminoxan kann auf verschiedene Arten nach bekannten Verfahren hergestellt werden. Eine der Methoden ist beispielsweise, daß eine Aluminiumkohlenwasserstoffverbindung und/oder eine Hydridoaluminiumkohlenwasserstoffverbindung mit Wasser (gasförmig, fest, flüssig oder gebunden - beispielsweise als Kristallwasser) in einem inerten Lösungsmittel (wie beispielsweise Toluol) umgesetzt wird. Zur Herstellung eines Aluminoxans mit voneinander verschiedenen Resten $R^c$ werden beispielsweise entsprechend der gewünschten Zusammensetzung zwei oder mehrere verschiedene Aluminiumtrialkyle mit Wasser umgesetzt (S. Pazynkiewicz, Polyhedron 9 (1990) 429, EP-A 302 424).

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Zur Entfernung von im Olefin vorhandenen Katalysatorgiften ist eine Reinigung mit einer Aluminiumverbindung, bevorzugt einem Aluminiumalkyl, wie Trimethylaluminium oder Triethylaluminium, vorteilhaft. Diese Reinigung kann sowohl im Polymerisationssystem selbst erfolgen, oder das Olefin wird vor der Zugabe in das Polymerisationssystem mit der Aluminiumverbindung in Kontakt gebracht und anschließend wieder abgetrennt.

Bevorzugt wird in dem erfindungsgemäßen Verfahren die Metallocenverbindung mit dem Cokatalysator außerhalb des Polymerisationsreaktors in einem separaten Schritt unter Verwendung eines geeigneten Lösemittels umgesetzt. Dabei kann eine Trägerung vorgenommen werden.

Falls dem Reaktionsgemisch Lösemittel zugesetzt wird, dann handelt es sich um gebräuchliche inerte Lösemittel wie z.B. aliphatische oder cycloaliphatische Kohlenwasserstoffe, Benzin- bzw. hydrierte Dieselölfraktionen oder Toluol.

Die Metallocenverbindung der Formel I wird bevorzugt in Form ihres Racemats eingesetzt. Die Metallocenverbindung wird bevorzugt in einer Konzentration, bezogen auf das Übergangsmetall, von $10^{-3}$ bis $10^{-8}$, vorzugsweise $10^{-4}$ bis $10^{-7}$ mol Übergangsmetall pro $dm^3$ Reaktorvolumen angewendet. Das Aluminoxan wird in einer Konzentration von $10^{-4}$ bis $10^{-1}$, vorzugsweise $10^{-4}$ bis $2 * 10^{-2}$ mol pro $dm^3$ Reaktorvolumen verwendet, bezogen auf den Gehalt an Aluminium. Prinzipiell sind aber auch höhere Konzentrationen möglich.

In dem erfindungsgemäßen Verfahren wird mindestens ein cyclisches, bevorzugt polycyclisches, Olefin mit mindestens einem acyclischen Olefin polymerisiert. Polycyclische Olefine weisen bevorzugt die Formeln VI, VII, VIII, IX, X oder XI auf

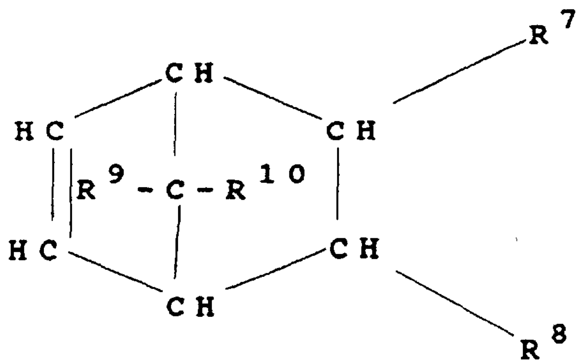

(VI)

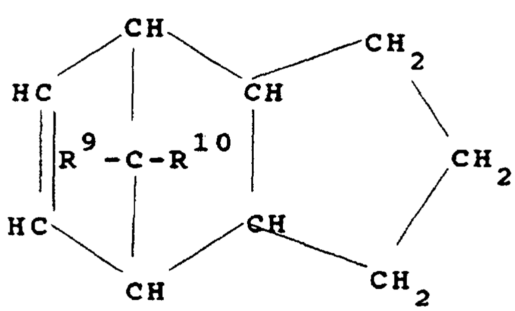

(VII)

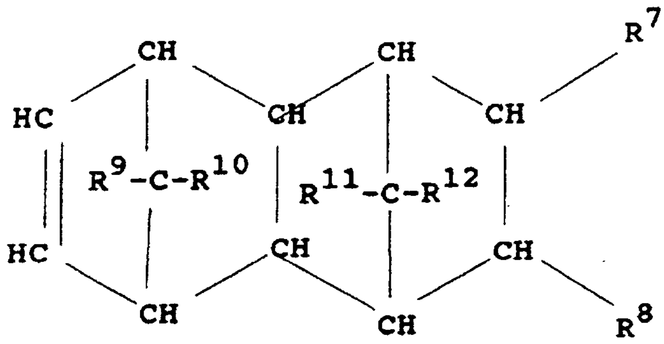

(VIII)

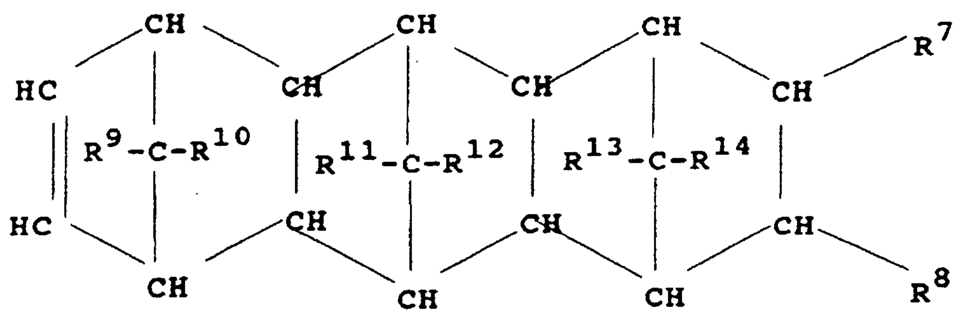

(IX)

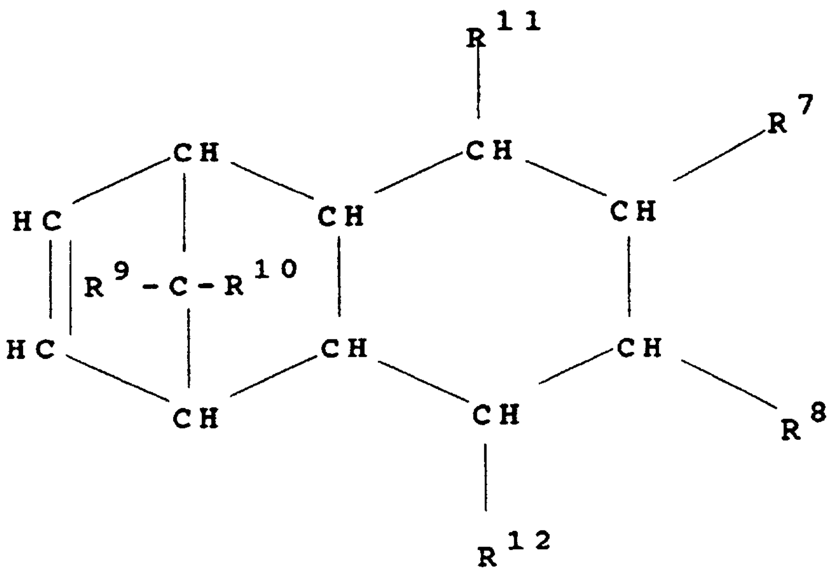

(X)

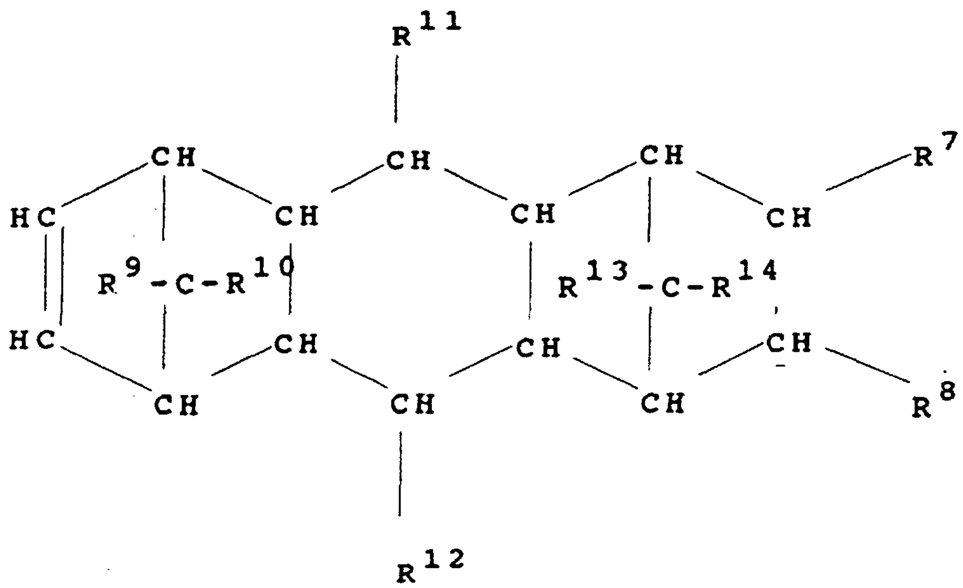

(XI)

,worin $R^7$, $R^8$, $R^9$, $R^{10}$, $R^{11}$, $R^{12}$, $R^{13}$ und $R^{14}$ gleich oder verschieden sind und ein Wasserstoffatom oder einen $C_1$-$C_{20}$-Kohlenwasserstoffrest wie $C_1$-$C_8$-Alkyl oder $C_6$-$C_{10}$-Aryl bedeuten, oder zwei oder mehr Reste $R^7$-$R^{14}$ zusammen ein $C_4$-$C_{40}$-Ringsystem bilden, wobei gleiche Reste $R^7$-$R^{14}$ in den verschiedenen Formeln eine unterschiedliche Bedeutung haben können. Besonders bevorzugt sind Cycloolefine der Formeln VI oder VIII, worin $R^7$, $R^8$, $R^9$, $R^{10}$, $R^{11}$, $R^{12}$, $R^{13}$ und $R^{14}$ gleich oder verschieden sind und ein Wasserstoffatom oder einen $C_1$-$C_{20}$-Kohlenwasserstoffrest, insbesondere einen $C_6$-$C_{10}$-Arylrest oder einen $C_1$-$C_8$-Alkylrest bedeuten, wobei gleiche Reste $R^7$-$R^{14}$ in den verschiedenen Formeln VI - XI eine unterschiedliche Bedeutung haben können.

Acyclische Olefine sind bevorzugt 1-Olefine mit 1 bis 40, vorzugsweise 1 - 20 Kohlenstoffatomen. Besonders bevorzugt sind 1-Olefine der Formel (XII)

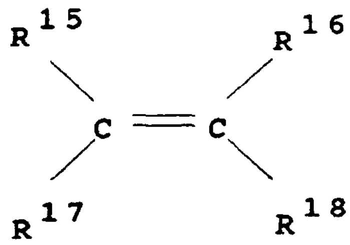

(XII)

worin $R^{15}$, $R^{16}$, $R^{17}$ und $R^{18}$ gleich oder verschieden sind und ein Wasserstoffatom oder einen $C_1$-$C_{20}$-Kohlenwasserstoffrest, bevorzugt einen $C_6$-$C_{10}$-Arylrest und einen $C_1$-$C_8$-Alkylrest bedeuten. Beispiele für acyclische Olefine sind Ethylen und Propylen.

Gegebenenfalls wird in dem erfindungsgemäßen Verfahren auch eines oder mehrere monocyclische Olefine, insbesondere der Formel (XIII) eingesetzt

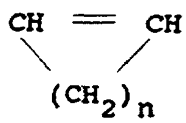

(XIII)

,worin n eine Zahl von 2 bis 10 ist.

Insbesondere werden Copolymere von polycyclischen Olefinen, vorzugsweise der Formeln VI und VIII, mit Ethylen hergestellt.

Besonders bevorzugte polycyclische Olefine sind Norbornen und Tetracyclododecen, wobei diese durch ($C_1$-$C_6$)-Alkyl substituiert sein können. Sie werden vorzugsweise mit Ethylen copolymerisiert; besondere Bedeutung besitzen Ethylen/Norbornen-Copolymere.

In dem erfindungsgemäßen Verfahren wird bevorzugt das polycyclische Olefin in einer Menge von 0,1 bis 99,9 Gew.-%, das monocyclische Olefin in einer Menge von 0 bis 99,9 Gew.-%, und das acyclische Olefin in einer Menge von 0,1 bis 99,9 Gew.-%, jeweils bezogen auf die Gesamtmenge der Monomeren, eingesetzt.

Die Konzentration des eingesetzten acyclischen Olefins ergibt sich aus dessen Löslichkeit in dem Reaktionsmedium bei gegebenem Druck und gegebener Temperatur.

Als polycyclische Olefine, monocyclische Olefine und acyclische Olefine sind auch Gemische zweier oder mehrerer Olefine des jeweiligen Typs zu verstehen. Das heißt, es können neben polycyclischen Bicopolymeren auch Ter- und Multicopolymere nach dem erfindungsgemäßen Verfahren hergestellt werden. Auch Copolymere monocyclischer Olefine und acyclischer Olefine können nach dem erfindungsgemäßen Verfahren erhalten werden.

Von den monocyclischen Olefinen ist Cyclopenten, das substituiert sein kann, bevorzugt.

Bevorzugt wird das erfindungsgemäße Verfahren bei Temperaturen von -78 bis 150°C, insbesondere 0 bis 100°C, und einem Druck von 0,01 bis 64 bar durchgeführt.

Die Polymerisation wird im flüssigen Cycloolefin selbst oder in Cycloolefin-Lösung durchgeführt, wobei zweckmäßigerweise der Druck oberhalb 1 bar liegt.

Bei der Herstellung von Copolymerisaten kann die Variation der Molverhältnisse des polycyclischen Olefins zum eingesetzten offenkettigen Olefin in einem weiten Bereich erfolgen. Bevorzugt werden molare Verhältnisse von 3:1 bis 100:1 Cycloolefin zu offenkettigem Olefin eingesetzt. Durch die Wahl der Polymerisationstemperatur, durch die Konzentration der Katalysatorkomponenten und das eingesetzte Molverhältnis bzw. den Druck des gasförmigen, offenkettigen Olefins läßt sich die Einbaurate an Comonomer beinahe beliebig steuern. Bevorzugt sind Einbauraten zwischen 20 und 80 Mol-% der cyclischen Komponenten und besonders bevorzugt werden Einbauraten zwischen 40 und 60 Mol-% der cyclischen Komponenten.

Die Polymerisation kann auch mehrstufig erfolgen, wobei auch Blockcopolymere entstehen können (EP-A-560 090).

Die mittlere Molmasse des gebildeten Polymeren läßt sich weiter durch Wasserstoff-Dosierung, Variation der Katalysatorkonzentration oder Variation der Temperatur in bekannter Weise steuern.

Die Polydispersität $M_w/M_n$ der Cycloolefincopolymeren ist mit Werten von 1,9 bis 3,5 recht eng. Dadurch resultiert ein Eigenschaftsbild, das diese für das Spritzgießen besonders geeignet macht.

Mit dem erfindungsgemäßen Verfahren lassen sich amorphe Cycloolefincopolymere herstellen, die keine teilkristallinen Ethylenpolymerisate enthalten. Die Copolymeren sind transparent, hart und thermoplastisch verarbeitbar. Die Reißspannungen (gemäß DIN 53457) liegen im Bereich von 50 bis 100 MPa, bevorzugt zwischen 55 und 70 MPa. Sowohl beim Extrudieren als auch beim Spritzgießen wurden bei Temperaturen von 300°C keine Zersetzungsreaktionen oder ein Viskositätsabbau gefunden.

Die erfindungsgemäß hergestellten Cycloolefincopolymere eignen sich besonders zur Herstellung von Formkörpern wie Extrusionsteilen (z.B. Folien, Schläuchen, Rohren, Stangen und Fasern) oder Spritzgußartikeln beliebiger Form und Größe.

Die Folien können extrudierte Folien, kalanderte Folien, Gießfilme, mono- und biaxial orientierte Folien oder Mehrschicht-Folien sein und eignen sich insbesondere als Lebensmittelverpackungsfolien oder Blisterverpackungen. Sie weisen eine hohe Wassersperrwirkung und eine geringe Gasdurchlässigkeit auf.

Die erfindungsgemäß hergestellten Cycloolefincopolymere eignen sich auch als Additiv in anderen Polymerfolien (insbesondere Polyolefinfolien wie Polypropylenfolien oder Polyethylenfolien) z.B. zum Zwecke der Fließverbesserung, Verbesserung der Lackierbarkeit, E-Modul-Beeinflussung und Herstellung von Opakfolien.

Eine wichtige Eigenschaft der erfindungsgemäß hergestellten Cycloolefincopolymere ist ihre Transparenz. Dadurch kommt besonders den optischen Anwendungen der extrudierten oder spritzgegossenen Teile aus Cycloolefincopolymeren eine große Bedeutung zu. Der mit einem Abbe-Refraktometer und Mischlicht bestimmte Brechungsindex der in den nachfolgenden Beispielen beschriebenen Reaktionsprodukte liegt im Bereich zwischen 1,520 und 1,555. Nachdem der Brechungsindex sehr nahe an dem von Kronglas (n = 1,51) liegt, können die erfindungsgemäßen Produkte als Glasersatz verschiedene Anwendungen finden wie beispielsweise Linsen, Prismen, Trägerplatten und -folien für optische Datenspeicher, für Videoplatten, für Compact Disks, als Deck- und Fokussierscheiben für Solarzellen, als Deckund Streuscheiben für Leistungsoptiken, als Lichtwellenleiter in der Form von Fasern oder Folien.

In schlagzähmodifizierter Form sind die erfindungsgemäß hergestellten Cycloolefincopolymeren als Strukturwerkstoff in verschiedenen technischen Bereichen einsetzbar (EP-A-566 988 ).

Die erfindungsgemäß erhaltenen Cycloolefincopolymere sind auch für die Herstellung von Polymerlegierungen einsetzbar. Die Legierungen können in der Schmelze oder in Lösung hergestellt werden. Die Legierungen weisen jeweils eine für bestimmte Anwendungen günstige Eigenschaftskombination der Komponenten auf. Für Legierungen mit den erfindungsgemäßen Cycloolefincopolymeren sind bevorzugt folgende Polymere einsetzbar: Polyethylen, Polypropylen, (Ethylen-Propylen)-Copolymere, Polybutylen, Pvly-(4-methyl-1-penten), Polyisopren, Polyisobutylen, Naturkautschuk, Poly-(methylmethacrylat), weitere Polymethacrylate, Polyacrylate, (Acrylat-Methacrylat)-Copolymere, Polystyrol, (Styrol-Acrylnitril)-Copolymere, Bisphenol-A-Polycarbonat, weitere Polycarbonate, aromatische Polyestercarbonate, Polyethylenterephthalat, Polybutylenterephthalat, amorphe Polyarylate, Nylon-6, Nylon-66, weitere Polyamide, Polyaramide, Polyetherketone, Polyoxymethylen, Polyoxyethylen, Polyurethane, Polysulfone, Polyethersulfone, Polyvinylidenfluorid.

Das erfindungsgemäße Verfahren liefert mit hoher Aktivität insbesondere transparente Cycloolefincopolymere, die hohe Reißfestigkeiten aufweisen.

Die in den folgenden Beispielen angegebenen Glastemperaturen Tg wurden mittels DSC (Differential Scanning Calorimetry) bei einer Aufheizrate von 20°C/min bestimmt. Die angegebenen Viskositätszahlen wurden gemäß DIN 53728 ermittelt. Die mechanischen Eigenschaften wurden im Zugdehnungsversuch gemessen (DIN 53457, Instron 4302).

Als Maß für die Katalysatoraktivität wird die Ausbeute an Polymer pro Zeiteinheit und pro mmol Metallocen herangezogen:

$$\text{Aktivität} = \frac{\text{Polymer [g]}}{\text{Zeiteinheit [h] x Menge Metallocen [mmol]}} = A^*$$

Allgemeine Angaben: Herstellung und Handhabung organometallischer Verbindungen erfolgten unter Ausschluß von Luft und Feuchtigkeit unter Argon-Schutz (Schlenk-Technik). Alle benötigten Lösungsmittel wurden vor Gebrauch durch mehrstündiges Sieden über einem geeigneten Trockenmittel und anschließende Destillation unter Argon absolutiert.

Die Herstellung der als Ausgangsverbindungen eingesetzten Diketone und Ketoaldehyde erfolgte nach literaturbekannten Methoden. Cyclopentadien und Methylcyclopentadien wurden durch Cracken der Dimeren gewonnen und bei - 35°C gelagert.

Die Ermittlung des $Al/CH_3$-Verhältnisses im Aluminoxan erfolgte durch Zersetzung der Probe mit $H_2SO_4$ und Bestimmung des Volumens der entstehenden Hydrolysegase unter Normalbedingungen sowie durch komplexometrische Titration des Aluminiums in der dann gelösten Probe nach Schwarzenbach.

Die Verbindungen wurden mit $^{1}H$-NMR, $^{13}C$-NMR und IR-Spektroskopie charakterisiert.

Die nachfolgenden Beispiele sollen die Erfindung näher erläutern:

Alle Glasgeräte wurden unter Vakuum ausgeheizt und mit Argon gespült. Alle Operationen wurden unter Ausschluß von Feuchtigkeit und Sauerstoff in Schlenkgefäßen durchgeführt. Die verwendeten Lösemittel wurden unter Argon von einer Na/K-Legierung abdestilliert.
Toluol lösliches Methylalumoxan wurde für die Beispiele zur Polymerisation als 10 Gew.-%ige Toluol-Lösung mit einem mittleren Oligomerisationsgrad von n = 20 eingesetzt (Witco). Gemäß Aluminiumbestimmung beträgt der Gehalt 36 mg Al/ml.

Beispiel 1

Bis(dimethylamido)[$\eta^5$:$\eta^5$-2,2-(cyclopentadienyl)(indenyl)propyliden]-zirkonium

Eine Lösung des Zirkoniumamids (416 mg, 1.55 mmol) in 25 ml Toluol wird auf - 78°C gekühlt und anschließend mit einer Lösung von 345 mg des Liganden in 10 ml Toluol tropfenweise versetzt. Die Lösung wird auf Raumtemperatur erwärmt und nach 12-stündigem Rühren für 3h auf 80°C erhitzt. Das Lösungsmittel wird im Vakuum entfernt und der Komplex in Form eines gelb-orangen Feststoffs in 99% Ausbeute (613 mg) erhalten.
$^1$H-NMR (400 MHz, $C_6D_6$): [ppm] d = 1.57, 1.89 (s, 6H, $C(CH_3)_2$), 2.46, 2.81 (s, 12H, $N(CH_3)_2$), 5.29 (m, 1H, CH in $C_5H_4$), 5.80 (m, 2H, CH in $C_5H_4$ und $C_9H_7$), 5.99 (m, 1 H, CH in $C_5H_4$), 6.08 (m, 1 H, CH in $C_5H_4$), 6.59 (d, 1 H, $^3J$(H, H) = 3.0 Hz, CH in $C_9H_7$), 6.69 (m, 1 H, CH in $C_9H_7$), 7.49 (m, 1 H, CH in $C_9H_7$), 7.62 (m, 1 H, CH in $C_9H_7$).
MS (CI): m/z (%) = 708 (10) [$2M^+$ - 2 $NMe_2$], 398 (100) [$M^+$], 355 (45) [$M^+$ - $NMe_2$], 311 (21 %) [$M^+$ - 2 $NMe_2$].

Beispiel 2

Bis(dimethylamido)[$\eta^5$:$\eta^5$-2,2-(cyclopentadienyl)(indenyl)propyliden]-hafnium

Eine Lösung des Hafniumamids (833 mg, 1.55 mmol) in 25 ml Xylol wird auf -78°C gekühlt und anschließend mit einer Lösung von 522 mg des Liganden in 10 ml Xylol tropfenweise versetzt. Die Lösung wird auf Raumtemperatur erwärmt und nach 2-stündigem Rühren für 8h auf 150°C erhitzt. Das Lösungsmittel wird im Vakuum entfernt und der Komplex aus wenig Pentan umkristallisiert. Der Komplex fällt in Form eines gelb-orangen Feststoffs (95% Ausbeute, 613 mg) aus.
$^1$H-NMR (400 MHz, $C_6D_6$): [ppm] d = 1.57, 1.88 (s, 6H, $C(CH_3)_2$), 2.51, 2.85 (s, 12H, $N(CH_3)_2$), 5.29 (m, 1 H, CH in $C_5H_4$), 5.70 - 5.80 (m, 2H, CH in $C_5H_4$ und $C_9H_7$), 6.00 (m, 1H, CH in $C_5H_4$), 6.04 (m, 1 H, CH in $C_5H_4$), 6.53 (d, 1 H, $^3J$(H,H) = 3.0 Hz, CH in $C_9H_7$), 6.71 (m, 1 H, CH in $C_9H_7$), 6.87 (m, 1 H, CH in $C_9H_7$), 7.49 (m, 1 H, CH in $C_9H_7$), 7.63 (m, 1 H, CH in $C_9H_7$).
MS (CI): m/z (%) = 620 (100), 600 (18), 512 (24), 497 (28), 442 (17), 399 (25), 222 (26), 207 (26), 115 (8), 107 (20).

Polymerisationsbeispiele

Beispiel A:

In einem 1,5 $dm^3$-Autoklav, der vorher gründlich mit Ethen gespühlt wurde, werden 600 $cm^3$ einer 85 gew.-%igen Lösung von Norbornen in Toluol vorgelegt. Durch mehrfaches Aufdrücken von Ethen (6 bar) wurde die Lösung mit Ethen gesättigt. In den so vorbereiteten Reaktor wurden im Gegenstrom 5 $cm^3$ toluolische Methylaluminoxanlösung (10,1 Gew.-%ige Methylaluminoxanlösung der Molmasse 1300 g/mol nach kryoskopischer Bestimmung) dosiert und 30 Minuten bei 70°C gerührt. Eine Lösung von 1,5 mg Bis(dimethylamido)[$\eta^5$:$\eta^5$-2,2-(cyclopentadienyl)(indenyl)propyliden]-zirkonium (I) in 5 $cm^3$ toluolischer Methylaluminoxanlösung wurde nach 15 minütiger Voraktivierung zugegeben. (Im Falle einer Wasserstoffregelung kann an dieser Stelle Wasserstoff aufgepreßt werden.)
Unter Rühren (750 UPM) wurde eine Stunde bei 70°C polymerisiert, wobei der Ethendruck durch Nachdosieren bei 6 bar gehalten wurde.
Nach Ende der Reaktionszeit wurde das Polymerisationsgemisch in ein Gefäß abgelassen und sofort in 5 $dm^3$ Aceton eingetragen, 10 Minuten gerührt und anschließend das ausgefallene Produkt filtriert. Der Filterkuchen wurde je dreimal abwechselnd mit 10 %iger Salzsäure und Aceton gewaschen. Abschließend wurde mit Wasser neutral gewaschen, der Rückstand in Aceton aufgeschlämmt und erneut filtriert. Das so gereinigte Polymer wurde bei 80°C im Vakuum (0,2 bar) 15 Stunden getrocknet.
Nach der Trocknung wurden 44 g farbloses Polymer erhalten, welches eine Glastemperatur von 193°C, eine Viskositätszahl von 69 $cm^3$/g, eine Reißspannung von 64 MPa und eine Reißdehnung von 3,3% aufwies. Die Aktivität $A^*$ betrug 10842 g Polymer/h x mmol.

Beispiel B:

Beispiel A wurde bei einem Ethylendruck von 18 bar und einer Polyrnersiationstemperatur von 90°C wiederholt.
Die Ausbeute an gereinigtem und getrocknetem Polymer betrug 152 g. Das Polymer wies eine Glastemperatur von 150°C, eine Viskositätszahl von 70 $cm^3$/g, eine Reißspannung von 62 MPa und eine Reißdehnung von 3,5 %. Die Aktivität $A^*$ betrug 56182 g Polymer/h x mmol.

Beispiel C:

Es wurde wie in Beispiel B verahren, jedoch wurden als Metallocen 0,5 mg Isopropyliden-bis(1-indenyl)bis (N,N-dimethylamido)zirkonium (II) verwendet. Es wurden 114 g gereinigtes und getrocknetes Polymer erhalten, mit einer Glastemperatur von 143°C, einer Viskositätszahl von 152 $cm^3$/g.

Beispiel D:

Es wurde wie in Beispiel A verfahren, jedoch wurden als Metallocen 0,1 mg Dimethylsilandiyl-(9-(2,7-di-tert-butyl)fluorenyl)-cyclopentadienyl-bis(N,N-dimethylamido)zirkonium (III) verwendet. Es wurden 17 g gereinigtes und getrocknetes Polymer erhalten mit einer Glastemperatur von 143°C und einer Viskositätszahl von 267 $cm^3$/g.

Beispiel E:

Es wurde wie in Beispiel A verfahren, jedoch wurden als Metallocen 0,2 mg Isopropyliden-(9-fluorenyl)-cyclopentadienyl-bis(N,N-dimethylamido)zirkonium (IV) verwendet. Es wurden 64 g gereinigtes und getrocknetes Polymer erhalten, mit einer Glastemperatur von 151 °C und einer Viskositätszahl von 147 $cm^3$/g.

**Tabelle: Polymerisationsergebnisse**

| Beispiel Nr. | Metallocen | Temp. (°C) | Ethylen-Druck (bar) | Menge Metallocen (mg) | Ausbeute (g) | VZ (cm3/g) | Tg (°C) | Verfahren (Toluol) |
|---|---|---|---|---|---|---|---|---|
| A | I | 70 | 6 | 1,5 | 44 | 69 | 193 | 85 %ige Lsg. |
| B | I | 90 | 18 | 1 | 152 | 70 | 150 | 85 %ige Lsg. |
| C | II | 90 | 18 | 0,5 | 114 | 152 | 143 | 85 %ige Lsg. |
| D | III | 70 | 6 | 0,1 | 17 | 267 | 143 | 85 %ige Lsg. |
| E | IV | 70 | 6 | 0,2 | 64 | 147 | 151 | 85 %ige Lsg. |

**Patentansprüche**

1. Verfahren zur Herstellung eines Cycloolefincopolymeren durch Polymerisation mindestens eines cyclischen Olefins und mindestens eines acyclischen Olefins, in Gegenwart eines Katalysators enthaltend mindestens eine Metallocenverbindung der Formel (I),

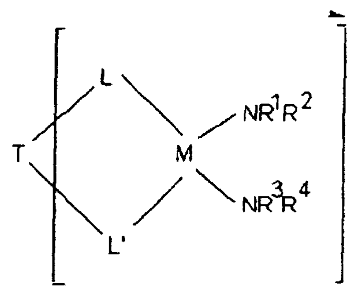

(I)

worin L und L' eine substituierte oder unsubstituierte Cyclopentadienylgruppe ist, T eine Verbrückung zwischen L und L' ist, und $[R^5R^6X]_n$ bedeutet, worin X unabhängig voneinander gleich oder verschieden Kohlenstoff, Silizium, Germanium oder Zinn sind, die Reste $R^5$ und $R^6$ unabhängig voneinander ein Wasserstoffatom oder einen $C_1$-$C_{30}$-Kohlenwasserstoffrest bedeuten, und n gleich 1, 2, 3 oder 4 bedeutet, M ein vierwertiges Übergangsmetall ist, und $R^1$, $R^2$, $R^3$ und $R^4$ unabhängig voneinander gleich oder verschieden ein Wasserstoffatom oder ein $C_1$-$C_{20}$-Kohlenwasserstoffrest ist.

2. Verfahren gemäß Anspruch 1, worin die Reste $R^5$ und $R^6$ ein Wasserstoffatom, $C_1$-$C_{21}$-Alkyl oder $C_6$-$C_{20}$-Aryl bedeuten.

3. Verfahren gemäß Anspruch 1 oder 2 worin die Brücke T ein Molekülrest ausgewählt aus der Gruppe Dimethylsilandiyl, Methylphenylsilandiyl, Diphenytsilandiyl, Dimethylgermandiyl, 1,2-Tetramethyldisilandiyl, 1,2-Ethyliden, 1,2-Propyliden, 1,2-Butyliden, 1,3-Propyliden, 1,4 Butyliden oder 2,2-Propyliden ist.

4. Verfahren gemäß einem oder mehreren der Ansprüche 1 bis 3, worin L und L' unabhängig voneinander Cyclopentadienyl, Tetramethylcyclopentadienyl, Methylcyclopentadienyl, Methyl-tert.-butylcyclopentadienyl,Tert.-butylcyclopentadienyl, Isopropylcyclopentadienyl, Dimethylcyclopentadienyl, Trimethylcyclopentadienyl, Trimethylethylcyclopentadienyl, Phenylcyclopentadienyl, Diphenylcyclopentadienyl, Indenyl, 2-Methylindenyl 2-Ethylindenyl, 3-Methylindenyl, 3-tert.-butylindenyl, 3-Trimethylsilylindenyl, 2-Methyl-4-phenylindenyl, 2-Ethyl-4-phenylindenyl, 2-Methyl-4-naphtyl-indenyl, 2-Methyl-4-isopropyl-indenyl, 4,5-Benzoindenyl, 2-Methyl-4,5-benzoindenyl, 2-Methyl-α-acenaphtindenyl, 2-Methyl-4,6-diisopropylindenyl, Fluorenyl, 4-Methylfluorenyl oder 2,7-Di-tert.-butylfluorenyl ist.

5. Verfahren zur Herstellung eines Cycloolefincopolymeren durch Polymerisation mindestens eines cyclischen Olefins und mindestens eines acyclischen Olefins, in Gegenwart eines Katalysators enthaltend mindestens eine Metallocerenyerbindung der Formel (II),

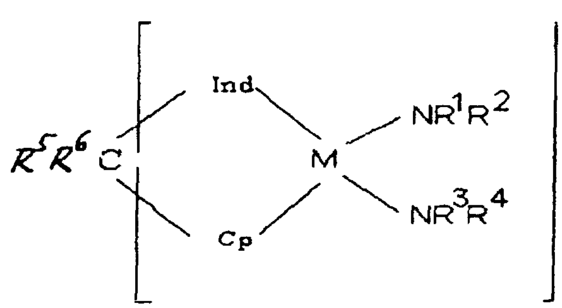

II

worin Cp eine unsubstituierte oder substituierte Cyclopentadiengruppe bedeutet. Ind unsubstituiertes oder substituiertes Indenyl bedeutet, die Reste $R^5$ und $R^6$ unabhängig voneinander gleich oder verschieden sind und ein Wasserstoffatom oder einen $C_1$-$C_{30}$-Kohlenwasserstoffrest bedeuten, und n gleich 1, 2, 3 oder 4 bedeutet, M ein vierwertiges Übergangsmetall ist, und $R^1$, $R^2$, $R^3$ und $R^4$ unabhängig voneinander gleich oder verschieden ein Wasserstoffatom oder ein $C_1$-$C_2$-Kohlenwasserstoffrest ist.

**6.** Verfahren gemäß Anspruch 4, worin Cp den Rest Cyclopentadienyl, Tetramethylcycloperitadienyl, Methylcyclopentadienyl, Methyl-tert.-butylcyclopentadienyl, Tert.-butylcyclopentadienyl, Isopropyicyclopentadienyl, Dimethylcyclopentadienyl, Trimethylcyclopentadienyl, Trimethylethylcyclopentadienyl, Phenylcyclopentadienyl, Diphenylcyclopentadienyl, Indenyl, 2-Methylindenyl, 2-Ethylindenyl, 3-Methylindenyl, 3-tert.-butylindenyl, 3-Trimethylsilylindenyl, 2-Methyl-4-phenylindenyl, 2-Ethyl-4-phenylindenyl, 2-Methyl-4-naphtyl-indenyl, 2-Methyl-4-isopropyl-indenyl, 4,5-Benzoindenyl, 2-Methyl-4,5-benzoindenyl, 2-Methyl-α-acenaphtindenyl, 2-Methyl-4,6-diisopropylindenyl, Fluorenyl, 4-Methylfluorenyl oder 2,7-Di-tert.-butylfluorenyl und Ind den Rest Indenyl, 2-Methylindenyl, 2-Ethylindenyl, 3-Methylindenyl, 3-tert.butylindenyl, 3-Trimethylsilylindenyl, 2-Methyl-4-phenylindenyl, 2-Ethyl-4-phenylindenyl, 2-Methyl-4-naphtyl-indenyl, 2-Methyl-4-isopropyl-indenyl, 4,5-Benzoindenyl, 2-Methyl-4,5-benzoindenyl, 2-Methyl-α-acenaphtindenyl oder 2-Methyl-4,6-diisopropylindenyl bedeutet.

**7.** Verfahren gemäß einem oder mehreren der Ansprüche 1 bis 6, worin der Katalysator zusätzlich mindestens einen Cokatalysator enthält.

**8.** Verfahren gemäß Anspruch 7, worin der Cokatalysator eine Aluminiumverbindung und/oder eine Borverbindung ist.

**9.** Verfahren gemäß Anspruch 8, worin der Cokatalysator ein Aluminoxan ist.

**10.** Verfahren gemäß einem oder mehreren der Ansprüche 1 bis 9, worin die Metallocenverbindung der Formel I eine der folgenden Verbindungen bedeutet:

bis(dimethylamido)[ $\eta^5$:$\eta^5$-2,2-(cyclopentadienyl)(indenyl)propylidene)]-zirconium
bis(dimeihylamido)[ $\eta^5$:$\eta^5$-2,2-(cyclopentadienyl)(indenyl)propylidene)]-hafnium
bis(dimethylamido)[ $\eta^5$:$\eta^5$-2,2-(cyclopentadienyl)(fluorenyl)propylidene)]-zirconium
bis(dimethylamido)[$\eta^5$:$\eta^5$-2,2-(cyclopentadienyl)(fluorenyl)propylidene)]-hafnium
bis(dimethylamido)[ $\eta^5$:$\eta^5$-2,2-(fluorenyl)(indenyl)propylidene)]zirconium
bis(dimethylamido)[ $\eta^5$:$\eta^5$-2,2-(fluorenyl)(indenyl)propylidene)]hafnium
bis(dimethylamido)[ $\eta^5$:$\eta^5$-2,2-(methylcyclopentadjenyl)(indenyl)propylidene)]zirconium
bis(dimethylamido)[$\eta^5$:$\eta^5$-2,2-( methylcyclopentadienyl)(fluorenyl )propylidene)]-zirconium
bis(dimethylamido)[$\eta^5$:$\eta^5$-2, 2-(fluorenyl )(2-methyl indenyl)propylidene)]-zirconium
bis(dimethylamido)[$\eta^5$:$\eta^5$-2, 2-(tetratnethylcyclopentadienyl)(indenyl)-propylidene)]-zirconium
bis(dimethylamido)[ $\eta^5$:$\eta^5$-2,2-(tetramethylcyclopentadienyl)(fluorenyl)-propylidene)]zirconium
bis(dimethylamido)[$\eta^5$:$\eta^5$-2,2-(fluorenyl)(2-ethylindenyl)propylidene)]-zirconium
bis(dimethylamido)[$\eta^5$:$\eta^5$-2,2-(cyclopentadienyl)(2-methylindenyl)-propylidene)]-zirconium
bis(dimethylamido)[$\eta^5$:$\eta^5$-2,2-(cyclopentadienyl)(2-ethylindenyl)-propylidene)]-zirconium
bis(dimethylamido)[$\eta^5$:$\eta^5$-2,2-(cyclopentadienyl)(3-trimethylsilyl)-propylidene)]-zirconium
bis(dimethylamido)[$\eta^5$:$\eta^5$-2,2-(methylcyclopentadienyl)(2-methylindenyl)-propylidene)]-zirconium
bis(dimethylamido)[$\eta^5$:$\eta^5$-2,2-(methylcyclopentadienyl)(2-ethyl indenyl)-propylidene)]zirconium
bis(dimethylamido)[$\eta^5$:$\eta^5$-2,2-( methylcyclopentadienyl)(3-trimethylsilylindenyl)propylidene)]zirconium
bis(dimethylamido)[dimethylsilanediyl($\eta^5$:$\eta^5$-(cyclopentadienyl)(indenyl)]-zirconium
bis(dimethylamido)[dimethylsilanediyl($\eta^5$:$\eta^5$-(fluorenyl)(indenyl)]-zirconium
bis(dimethylamido)[dimethylsilanediyl($\eta^5$:$\eta^5$-(methylcyclopentadienyl)(indenyl)]-zirconium
bis(dimethylamido)[dimethylsilanediyl($\eta^5$:$\eta^5$-(methylcyclopentadienyl)(fluorenyl)]-zirconium
bis(dimethylamido)[dimethylsilanediyl($\eta^5$:$\eta^5$-2,2-(fluorenyl)(2-methyl-indenyl)]-zirconium
bis(dimethylamido)[dimethylsilanediyl($\eta^5$:$\eta^5$-2,2-(tetramethylcyclopentadienyl)(indenyl))]zirconium
bis(dimethylamido)[dimethylsilanediyl($\eta^5$:$\eta^5$-2,2-(tetramethylcyclopentadienyl)(fluorenyl)]-zirconium
bis(dimethylamido)[dimethylsilanediyl($\eta^5$:$\eta^5$-2,2-(fluorenyl)(2-ethylindenyl))]-zirconiurn
bis(dimethylamido)[dimethylsilanediyl(2,2-(cyclopentadienyl)(2-methyl-indenyl)]-zirconium
bis(dimethylamido)[dimethylsilanediyl($\eta^5$:$\eta^5$-2,2-(cyclopentadienyl)(2-ethyl-indenyl]-zirconium
bis(dimethylamido)[dimethylsilanediyl($\eta^5$:$\eta^5$-2,2-(cyclopentadienyl)(trimethylsilyl indenyl))]-zirconium
bis(dimethylamido)[dimethylsilanediyl($\eta^5$:$\eta^5$-2,2-(methylcyclopentadienyl)-(2-methylindenyl))]-zirconium

bis(dimethylamido)[dimethylsilanediyl($\eta^5$:$\eta^5$-2,2-(methylcyclopentadienyl)(2-ethylindenyl))]-zirconium
bis(dimethylamido)[dimethylsilanediyl($\eta^5$:$\eta^5$-2,2-(methylcyclopentadienyl)(3-trimethylsilylindenyl))]-zirconium
stanntetraylbis[($\eta^5$:$\eta^5$-bis(cyclopentadienyl)-bis-(dimethylamido)-zirconium]
bis(dimethylamido)[ $\eta^5$:$\eta^5$-2,2-(cyclopentadienyl)(indenyl)propylidene)]-zirconium
bis(dimethylamido)[ $\eta^5$:$\eta^5$-2,2-(cyclopentadienyl)(indenyl)propylidene)]-hafnium
bis(dimethylamido)[ $\eta^5$:$\eta^5$-2,2-(fluorenyl)(indenyl)propylidene ]-zirconium
bis(dimethylamido)[ $\eta^5$:$\eta^5$-2,2-(fluorenyl)(indenyl)propylidene)]-hafnium
bis(dimethylamido)[ $\eta^5$:$\eta^5$-2,2-(methylcyclopentadienyl)(indenyl)-propylidene)]-zirconium
bis(dimethylamido)[ $\eta^5$:$\eta^5$-2,2-(fluorenyl)(2-methylindenyl)progylidene)]-zirconium
bis(dimethylamido)[ $\eta^5$:$\eta^5$-2,2-(tetramethylcyclopentadienyl)(indenyl)-propylidene)]-zirconium
bis(dimethylamido)[$\eta^5$:$\eta^5$-2,2-(fluorenyl)(2-ethylindenyl)propylidene)]-zirconium
bis(dimethylamido)[ $\eta^5$:$\eta^5$-2,2-(cyclopentadienyl}(2-methylindenyl)propylidene)]-zirconium
bis(dimethylamido)[ $\eta^5$:$\eta^5$-2,2-(cyclopentadienyl)(2-ethylindenyl)propylidene)]-zirconium
bis(dimethylamido)[$\eta^5$:$\eta^5$-2,2-(cyclopentadienyl)(3-trimethylsilylindenyl)-propylidene]-zirconium
bis(dimethylamido)[$\eta^5$:$\eta^5$-2,2-(methylcyclopentadienyl)(2-methylindenyl)-propylidene)-zirconium
bis(dimethylamido)[$\eta^5$:$\eta^5$-2,2-(methylcyclopentadienyl)(2-ethylindenyl)-propylidene]-zirconium
bis(dimethylamido)[$\eta^5$:$\eta^5$-2,2-(methylcyclopentadienyl)(3-trimethylsilylindenyl)-propylidene]-zirconium
bis(dimethylamido)[$\eta^5$:$\eta^5$-2,2-(2-methylindenyl)(indenyl)-propylidene]-zirconium
bis(dimethylamido)[$\eta^5$:$\eta^5$-2,2-bis(indenyl)propylidene)]-zirconium.

**11.** Verfahren gemäß einem oder mehreren der Ansprüche 1 bis 10, worin M gleich Titan, Zirkonium oder Hafnium ist.

**12.** Verfahren gemäß einem oder mehreren der Ansprüche 1 bis 11, worin $R^1$, $R^2$, $R^3$ und $R^4$ die gleich Bedeutung besitzen und $C_1$-$C_{20}$-Alkyl oder $C_6$-$C_{14}$-Aryl bedeuten.

**13.** Verfahren gemäß einem oder mehreren der Ansprüche 1 bis 12, worin $R^1$, $R^2$, $R^3$ und $R^4$ Methyl bedeuten.

**14.** Verfahren gemäß einem oder mehreren der Ansprüche 1 bis 13, worin das cyclische Olefin ei polycylisches Olefin der Formeln VI bis XI ist,

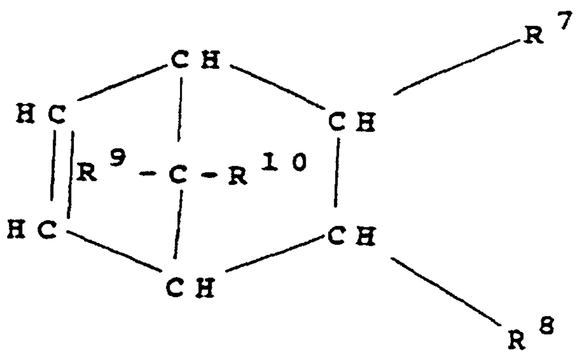

(VI)

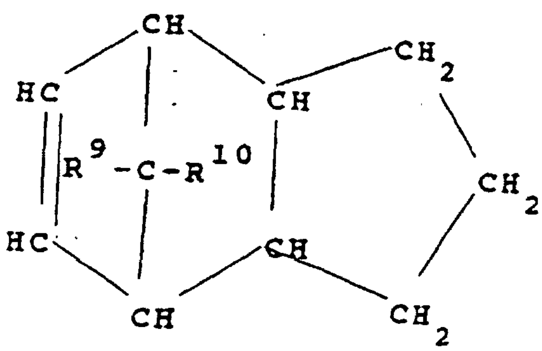

(VII)

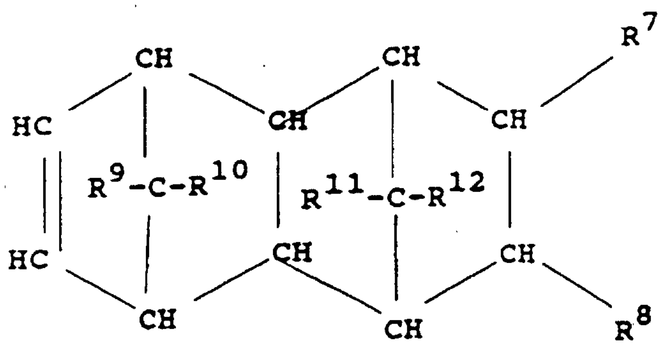

(VIII)

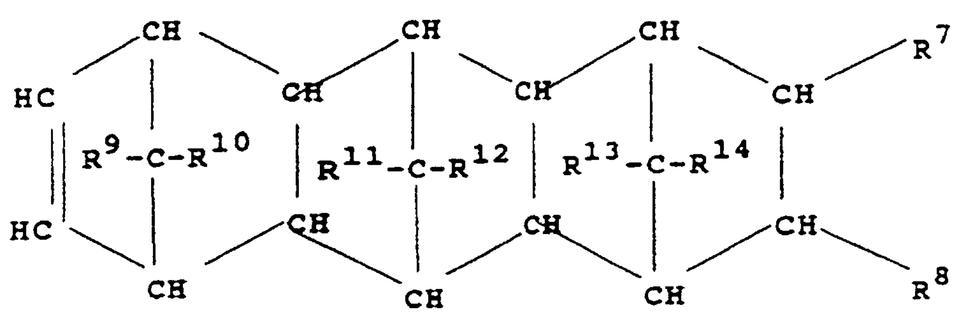

(IX)

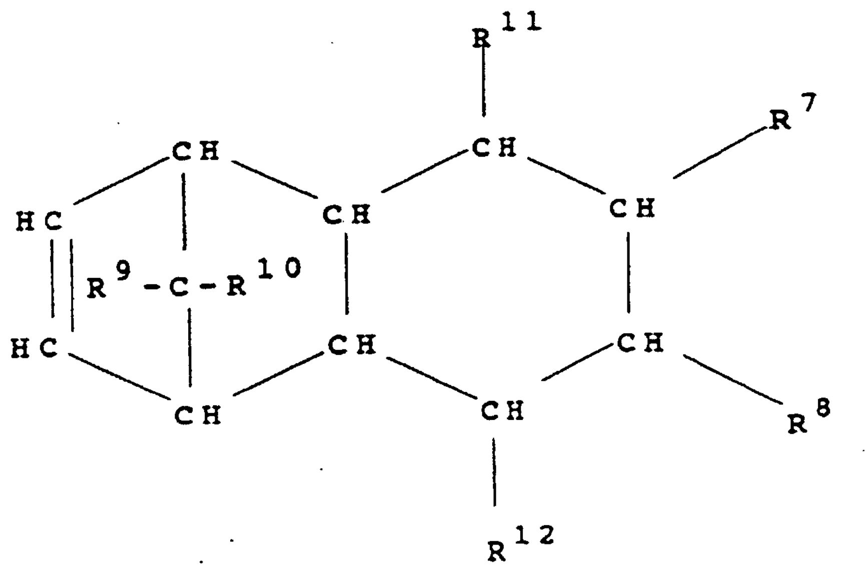

(X)

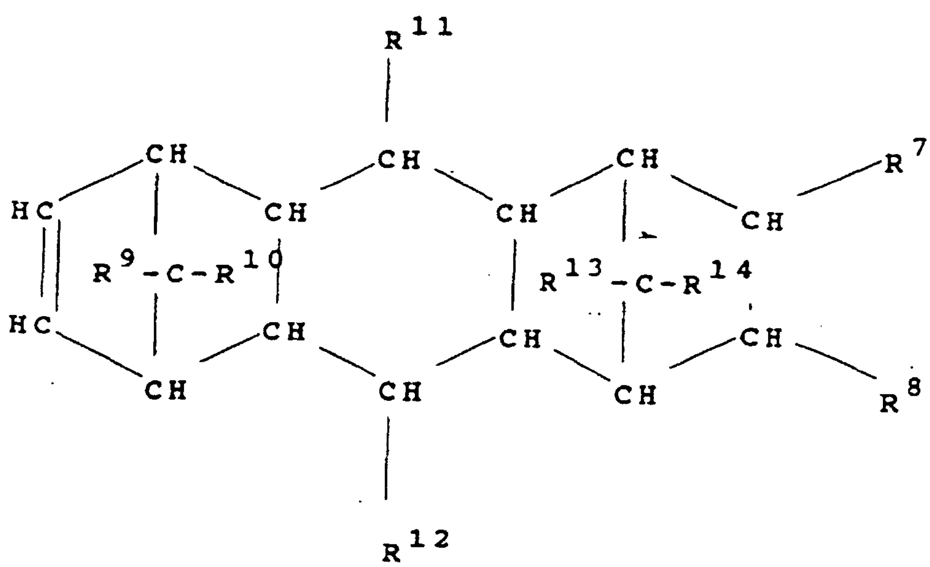

(XI)

,worin $R^7$, $R^8$, $R^9$, $R^{10}$, $R^{11}$, $R^{12}$, $R^{13}$ und $R^{14}$ gleich oder verschieden sind und ein Wasserstoffatom oder einen $C_1$-$C_{20}$-Kohienwasserstoffrest wie $C_1$-$C_8$-Alkyl oder $C_6$-$C_{10}$-Aryl bedeuten, oder zwei oder mehr Reste $R^7$-$R^{14}$ zusammen ein $C_4$-$C_{40}$-Ringsystem bilden, wobei gleiche Reste $R^7$-$R^{14}$ in den verschiedenen Formeln eine unterschiedliche Bedeutung haben können.

**15.** Verfahren gemäß einem oder mehreren der Ansprüche 1 bis 14, worin das acyclische Olefin ein 1-Olefin mit 1-20 C-Atomen ist.

**16.** Verfahren gemäß einem oder mehreren der Ansprüche 1 bis 15 worin das acyclische Olefin ein 1-Olefin der Formel XII ist.

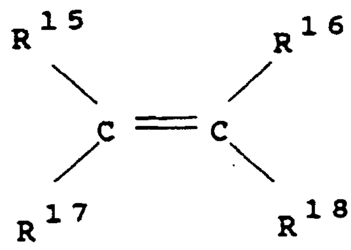

(XII)

worin $R^{15}$, $R^{16}$, $R^{17}$ und $R^{18}$ gleich oder verschieden sind und ein Wasserstoffatom oder einen $C_1$-$C_{20}$-Kohlenwaserstoffrest, bedeuten.

**17.** Verfahren gemäß einem oder mehreren der Ansprüche 1 bis 16, worin das cyclische Olefin ein Olefin der Formel VI oder VIII und das acyclische Olefin Ethylen ist.

**18.** Verfahren gemäß einem oder mehreren der Ansprüche 1 bis 17, worin das cyclische Olefin Norbornen ist.

**19.** Verfahren gemäß einem oder mehreren der Ansprüche 1 bis 18, wobei zusätzlich eines oder mehrere der monocyclischen Olefine der Formel XIII

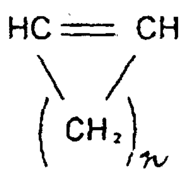

(XIII)

worin n eine Zahl von 2 bis 10 ist, eingesetzt werden.

**20.** Verfahren gemäß Anspruch 19, wobei das monocyclischen Olefine Cyclopenten ist, das substituiert sein kann.

### Claims

**1.** Process for preparing a cycloolefin copolymer by polymerization of at least one cyclic olefin and at least one acyclic olefin in the presence of a catalyst comprising at least one metallocene compound of the formula (I),

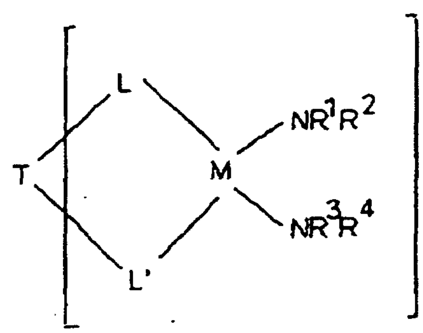

(I)

where L and L' are each a substituted or unsubstituted cyclopentadienyl group, T is a bridge between L and L' and is $(R^5R^6X]_n$, where X are each, independently of one another, carbon, silicon, germanium or tin, the radicals $R^5$ and $R^6$ are each, independently of one another, a hydrogen atom or a $C_1$-$C_{30}$-hydrocarbon radical and n is 1, 2,

3 or 4, M is a tetravalent transition metal and $R^1$, $R^2$, $R^3$ and $R^4$ are identical or different and are each, independently of one another, a hydrogen atom or a $C_1$-$C_{20}$-hydrocarbon radical.

**2.** Process according to Claim 1, wherein the radicals $R^5$ and $R^6$ are each a hydrogen atom, $C_1$-$C_{20}$-alkyl or $C_6$-$C_{20}$-aryl.

**3.** Process according to Claim 1 or 2, wherein the bridge T is a radical selected from the group consisting of dimethylsilanediyl, methylphenylsilanediyl, diphenylsilanediyl, dimethylgermanediyl, 1,2-tetramethyldisilanediyl, 1,2-ethylidene, 1,2-propylidene, 1,2-butylidene, 1,3-propylidene, 1,4-butylidene and 2,2-propylidene.

**4.** Process according to one or more of Claims 1 to 3, wherein L and L' are each, independently of one another, cyclopentadienyl, tetramethylcyclopentadienyl, methylcyclopentadienyl, methyl-tert-butylcyclopentadienyl, tert-butylcyclopentadienyl, isopropylcyclopentadienyl, dimethylcyclopentadienyl, trimethylcyclopentadienyl, trimethylethylcyclopentadienyl, phenylcyclopentadienyl, diphenylcyclopentadienyl, indenyl, 2-methylindenyl, 2-ethylindenyl, 3-methylindenyl, 3-tert-butylindenyl, 3-trimethylsilylindenyl, 2-methyl-4-phenylindenyl, 2-ethyl-4-phenylindenyl, 2-methyl-4-naphthylindenyl, 2-methyl-4-isopropylindenyl, 4,5-benzoindenyl, 2-methyl-4,5-benzoindenyl, 2-methyl-a-acenaphthindenyl, 2-methyl-4,6-diisopropylindenyl, fluorenyl, 4-methylfluorenyl or 2,7-di-tert-butylfluorenyl.

**5.** Process for preparing a cycloolefin copolymer by polymerization of at least one cyclic olefin and at least one acyclic olefin in the presence of a catalyst comprising at least one metallocene compound of the formula (II),

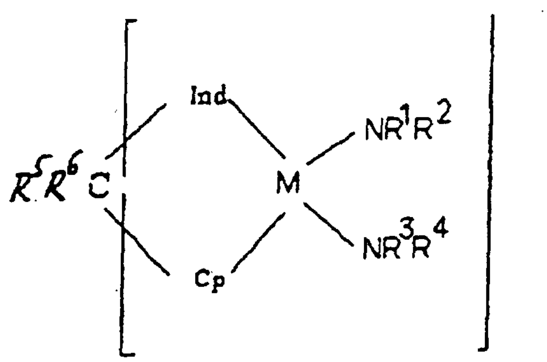

II

where Cp is an unsubstituted or substituted cyclopentadiene group, Ind is an unsubstituted or substituted indenyl, the radicals $R^5$ and $R^6$ are identical or different and are each, independently of one another, a hydrogen atom or a $C_1$-$C_{30}$-hydrocarbon radical and n is 1, 2, 3 or 4, M is a tetravalent transition metal and $R^1$, $R^2$, $R^3$ and $R^4$ are identical or different and are each, independently of one another, a hydrogen atom or a $C_1$-$C_{20}$-hydrocarbon radical.

**6.** Process according to Claim 4, wherein Cp is the radical cyclopentadienyl, tetramethylcyclopentadienyl, methylcyclopentadienyl, methyl-tert-butylcyclopentadienyl, tert-butylcyclopentadienyl, isopropylcyclopentadienyl, dimethylcyclopentadienyl, trimethylcyclopentadienyl, trimethylethylcyclopentadienyl, phenylcyclopentadienyl, diphenylcyclopentadienyl, indenyl, 2-methylindenyl, 2-ethylindenyl, 3-methylindenyl, 3-tert-butylindenyl, 3-trimethylsilylindenyl, 2-methyl-4-phenylindenyl, 2-ethyl-4-phenylindenyl, 2-methyl-4-naphthylindenyl, 2-methyl-4-isopropylindenyl, 4,5-benzoindenyl, 2-methyl-4,5-benzoindenyl, 2-methyl-α-acenaphthindenyl, 2-methyl-4,6-diisopropylindenyl, fluorenyl, 4-methylfluorenyl or 2,7-di-tert-butylfluorenyl and Ind is the radical, indenyl, 2-methylindenyl, 2-ethylindenyl, 3-methylindenyl, 3-tert-butylindenyl, 3-trimethylsilylindenyl, 2-methyl-4-phenylindenyl, 2-ethyl-4-phenylindenyl, 2-methyl-4-naphthylindenyl, 2-methyl-4-isopropylindenyl, 4,5-benzoindenyl, 2-methyl-4,5-benzoindenyl, 2-methyl-α-acenaphthindenyl or 2-methyl-4,6-diisopropylindenyl.

**7.** Process according to one or more of Claims 1 to 6, wherein the catalyst further comprises at least one cocatalyst.

**8.** Process according to Claim 7, wherein the cocatalyst is an aluminium compound and/or a boron compound.

**9.** Process according to Claim 8, wherein the cocatalyst is an aluminoxane.

**10.** Process according to one or more of Claims 1 to 9, wherein the metallocene compound of the formula I is one of the following compounds:

bis(dimethylamido)[$\eta^5$:$\eta^5$-2,2-(cyclopentadienyl)(indenyl)propylidene)]zirconium
bis(dimethylamido) [$\eta^5$:$\eta^5$-2,2-(cyclopentadienyl)(indenyl)propylidene)]hafnium
bis(dimethylamido)[$\eta^5$:$\eta^5$-2,2-(cyclopentadienyl)(fluorenyl)propylidene)]zirconium
bis(dimethylamido)[$\eta^5$:$\eta^5$-2,2-(cyclopentadienyl)(fluorenyl)propylidene)]hafnium
bis (dimethylamido) [$\eta^5$:$\eta^5$-2,2-(fluorenyl)(indenyl)propylidene)]zirconium
bis(dimethylamido) [$\eta^5$:$\eta^5$-2,2-(fluorenyl)(indenyl)propylidene)]hafnium
bis (dimethylamido) [$\eta^5$:$\eta^5$-2,2-(methylcyclopentadienyl)(indenyl)propylidene)]zirconium
bis(dimethylamido)[$\eta^5$:$\eta^5$-2,2-(methylcyclopentadienyl)(fluorenyl)propylidene)]zirconium
bis(dimethylamido)[$\eta^5$:$\eta^5$-2,2-(fluorenyl)(2-methylindenyl)(propylidene)]zirconium
bis(dimethylamido)[$\eta^5$:$\eta^5$-2,2-(tetramethylcyclopentadienyl)(indenyl)propylidene)]zirconium
bis(dimethylamido)[$\eta^5$:$\eta^5$-2,2-(tetramethylcyclopentadienyl)(fluorenyl)propylidene)]zirconium
bis(dimethylamido)[$\eta^5$:$\eta^5$-2,2-(fluorenyl)(2-ethylindenyl)propylidene)]zirconium
bis(dimethylamido)[$\eta^5$:$\eta^5$-2,2-(cyclopentadienyl)-(2-methylindenyl)propylidene)]zirconium
bis(dimethylamido)[$\eta^5$:$\eta^5$-2,2-(cyclopentadienyl)-(2-ethylindenyl)propylidene)]zirconium
bis(dimethylamido)[$\eta^5$:$\eta^5$-2,2-(cyclopentadienyl)-(3-trimethylsilyl)propylidene)]zirconium
bis(dimethylamido)[$\eta^5$:$\eta^5$-2,2-(methylcyclopentadienyl)(2-methylindenyl)propylidene)]zirconium
bis(dimethylamido)[$\eta^5$:$\eta^5$-2,2-(methylcyclopentadienyl)(2-ethylindenyl)propylidene)]zirconium
bis(dimethylamido)[$\eta^5$:$\eta^5$-2,2-(methylcyclopentadienyl)(3-trimethylsilylindenyl)propylidene)]zirconium
bis(dimethylamido)[dimethylsilanediyl($\eta^5$:$\eta^5$-(cyclopentadienyl)(indenyl)]zirconium
bis(dimethylamido)[dimethylsilanediyl($\eta^5$:$\eta^5$-(fluorenyl)(indenyl)]zirconium
bis(dimethylamido)[dimethylsilanediyl($\eta^5$:$\eta^5$-(methylcyclopentadienyl)(indenyl)]zirconium
bis(dimethylamido)[dimethylsilanediyl($\eta^5$:$\eta^5$-(methylcyclopentadienyl)(fluorenyl)]zirconium
bis(dimethylamido)[dimethylsilanediyl($\eta^5$:$\eta^5$-2,2-(fluorenyl)(2-methylindenyl)]zirconium
bis(dimethylamido)[dimethylsilanediyl($\eta^5$:$\eta^5$-2,2-(tetramethylcyclopentadienyl)(indenyl))]zirconium
bis(dimethylamido)[dimethylsilanediyl($\eta^5$:$\eta^5$-2,2-(tetramethylcyclopentadienyl)(fluorenyl)]zirconium
bis(dimethylamido)[dimethylsilanediyl($\eta^5$:$\eta^5$-2,2-(fluorenyl)(2-ethylindenyl)]zirconium
bis(dimethylamido)[dimethylsilanediyl(2,2-(cyclopentadienyl)(2-methylindenyl)]zirconium
bis(dimethylamido)[dimethylsilanediyl($\eta^5$:$\eta^5$-2,2-(cyclopentadienyl)(2-ethylindenyl)]zirconium
bis(dimethylamido)[dimethylsilanediyl($\eta^5$:$\eta^5$-2,2-(cyclopentadienyl)(trimethylsilylindenyl))]zirconnium
bis(dimethylamido)[dimethylsilanediyl($\eta^5$:$\eta^5$-2,2-(methylcyclopentadienyl)(2-methylindenyl))]zirconnium
bis(dimethylamido)[dimethylsilanediyl($\eta^5$:$\eta^5$-2,2-(methylcyclopentadienyl)(2-ethylindenyl))]zirconnium
bis(dimethylamido)[dimethylsilanediyl($\eta^5$:$\eta^5$-2,2-(methylcyclopentadienyl)(3-trimethylsilylindenyl))]zirconium
stanntetraylbis($\eta^5$:$\eta^5$-bis(cyclopentadienyl)-bis-(dimethylamido)zirconium]
bis(dimethylamido)[$\eta^5$:$\eta^5$-2,2-(cyclopentadienyl)(indenyl)propylidene)]zirconium
bis(dimethylamido)[$\eta^5$:$\eta^5$-2,2-(cyclopentadienyl)(indenyl)propylidene)]hafnium
bis(dimethylamido)[$\eta^5$:$\eta^5$-2,2-(fluorenyl)(indenyl)propylidene]zirconium
bis (dimethylamido) [$\eta^5$:$\eta^5$-2,2-(fluorenyl)(indenyl)propylidene)]hafnium
bis(dimethylamido)[$\eta^5$:$\eta^5$-2,2-(methylcyclopentadienyl)(indenyl)propylidene)]zirconium
bis(dimethylamido)[$\eta^5$:$\eta^5$-2,2-(fluorenyl)(2-methylindenyl)propylidene)]zirconium
bis(dimethylamido)[$\eta^5$:$\eta^5$-2,2-(tetramethylcyclopentadienyl)(indenyl)propylidene)]zirconium
bis(dimethylamido)[$\eta^5$:$\eta^5$-2,2-(fluorenyl)(2-ethylindenyl)propylidene)]zirconium
bis(dimethylamido)[$\eta^5$:$\eta^5$-2,2-(cyclopentadienyl)(2-methylindenyl)propylidene)]zirconium
bis(dimethylamido)[$\eta^5$:$\eta^5$-2,2-(cyclopentadienyl)(2-ethylindenyl)propylidene)]zirconium
bis(dimethylamido)[$\eta^5$:$\eta^5$-2,2-(cyclopentadienyl)(3-trimethylsilylindenyl)propylidene]zirconium
bis(dimethylamido)[$\eta^5$:$\eta^5$-2,2-(methylcyclopentadienyl)(2-methylindenyl)propylidene)zirconium
bis(dimethylamido)[$\eta^5$:$\eta^5$-2,2-(methylcyclopentadienyl)(2-ethylindenyl)propylidene]zirconium
bis (dimethylamido) [$\eta^5$:$\eta^5$-2,2-(methylcyclopentadienyl)(3-trimethylsilylindenyl)propylidene]zirconium
bis (dimethylamido) [$\eta^5$:$\eta^5$-2,2-(2-methylindenyl)-(indenyl)propylidene]zirconium
bis(dimethylamido)[$\eta^5$:$\eta^5$-2,2-bis(indenyl)propylidene)]zirconium.

**11.** Process according to one or more of Claims 1 to 10, wherein M is titanium, zirconium or hafnium.

**12.** Process according to one or more of Claims 1 to 11, wherein $R^1$, $R^2$, $R^3$ and $R^4$ are identical and are , each $C_1$-$C_{20}$-alkyl or $C_6$-$C_{14}$-aryl.

**13.** Process according to one or more of Claims 1 to 12, wherein $R^1$, $R^2$, $R^3$ and $R^4$ are each methyl .

**14.** Process according to one or more of Claims 1 to 13, wherein the cyclic olefin is a polycyclic olefin having one of the formulae VI to XI,

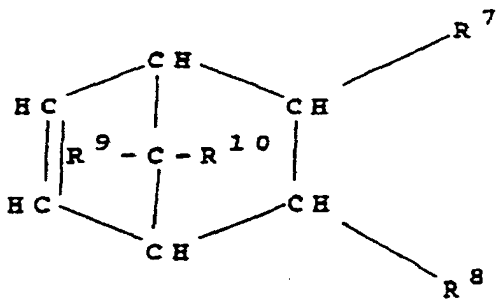

(VI)

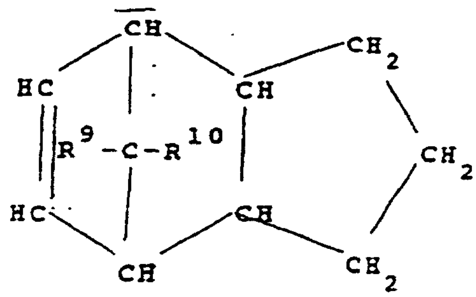

(VII)

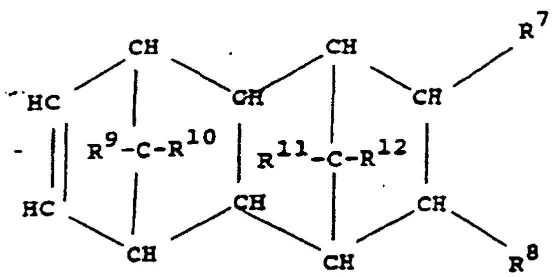

(VIII)

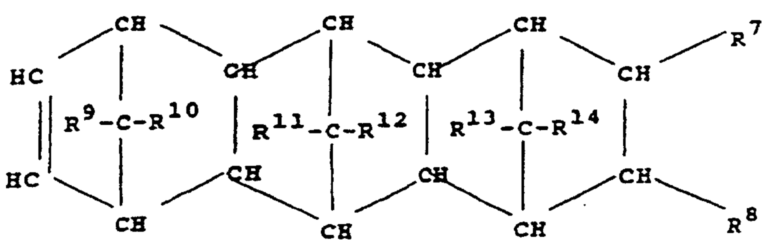

(IX)

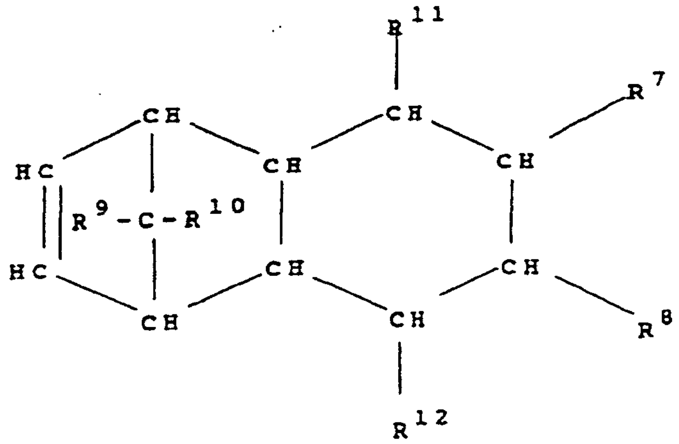

(X)

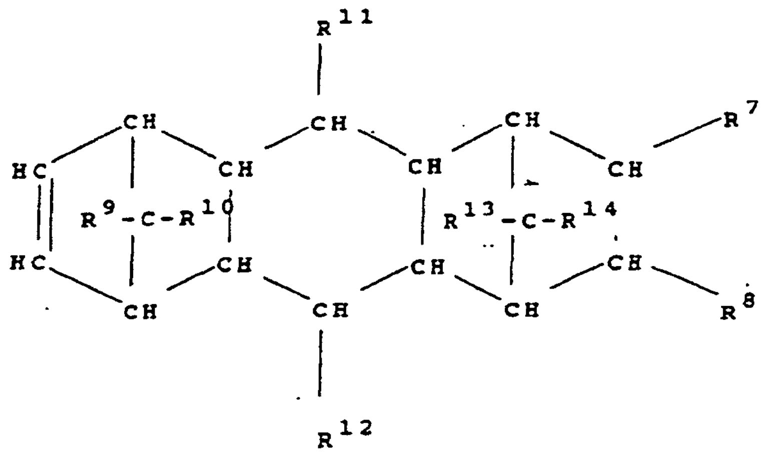

(XI)

where $R^7$, $R^8$, $R^9$, $R^{10}$, $R^{11}$, $R^{12}$, $R^{13}$ and $R^{14}$ are identical or different and are each a hydrogen atom or a $C_1$-$C_{20}$-hydrocarbon radical such as $C_1$-$C_8$-alkyl or $C_6$-$C_{10}$-aryl or two or more radicals $R^7$-$R^{14}$ together form a $C_4$-$C_{40}$ ring system, where the same radicals $R^7$-$R^{14}$ in the various formulae can have different meanings.

**15.** Process according to one or more of Claims 1 to 14, wherein the acyclic olefin is a 1-olefin having 1-20 carbon atoms.

**16.** Process according to one or more of Claims 1 to 15, wherein the acyclic'olefin is a 1-olefin of the formula XII,

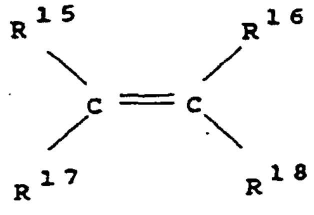

(XII)

where $R^{15}$, $R^{16}$, $R^{17}$ and $R^{18}$ are identical or different and are each a hydrogen atom or a $C_1$-$C_{20}$-hydrocarbon

radical.

**17.** Process according to one or more of Claims 1 to 16, wherein the cyclic olefin is an olefin of the formula VI or VIII and the acyclic olefin is ethylene.

**18.** Process according to one or more of Claims 1 to 17, wherein the cyclic olefin is norbornene.

**19.** Process according to one or more of Claims 1 to 18, wherein one or more monocyclic olefins of the formula XIII

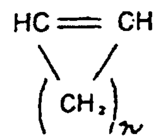

(XIII)

where n is from 2 to 10, are additionally used.

**20.** Process according to Claim 19, wherein the monocyclic olefin is cyclopentene, which may be substituted.

**Revendications**

**1.** Procédé pour la préparation d'un polymère de cyclo-oléfine par polymérisation d'au moins une oléfine cyclique et d'au moins une oléfine acyclique, en présence d'un catalyseur contenant au moins un composé métallocène de formule (I)

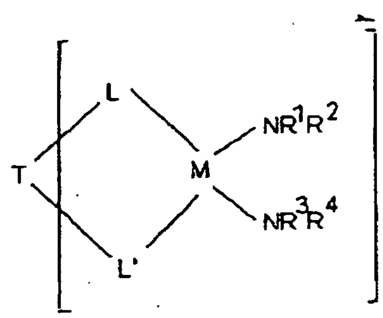

(I)

dans laquelle L et L' représentent un groupe cyclopentadiényle substitué ou non substitué, T est un groupe pontant entre L et L', et représente $[R^5R^6X]_n$, dans lequel les symboles X, indépendamment les uns des autres, identiques ou différents, représentent des atomes de carbone, silicium, germanium ou étain, les radicaux $R^5$ et $R^6$ représentent, indépendamment l'un de l'autre, un atome d'hydrogène ou un radical hydrocarboné en $C_1$-$C_{30}$ et n est égal à 1, 2, 3 ou 4, M est un métal de transition tétravalent et $R^1$, $R^2$, $R^3$ et $R^4$, indépendamment les uns des autres, identiques ou différents, représentent un atome d'hydrogène ou un radical hydrocarboné en $C_1$-$C_{20}$.

**2.** Procédé selon la revendication 1, dans lequel les radicaux $R^5$ et $R^6$ représentent un atome d'hydrogène, un groupe alkyle en $C_1$-$C_{20}$ ou aryle en $C_6$-$C_{20}$.

**3.** Procédé selon la revendication 1 ou 2, dans lequel le pont T est un reste de molécule choisi dans l'ensemble constitué par les groupes diméthylsilanediyle, méthylphénylsilanediyle, diphénylsilanediyle, diméthylgermanediyle, 1,2-tétraméthyldisilanediyle, 1,2-éthylidène, 1,2-propylidène, 1,2-butylidène, 1,3-propylidène, 1,4-butylidène et 2,2-propylidène.

**4.** Procédé selon une ou plusieurs des revendications 1 à 3, dans lequel L et L', indépendamment l'un de l'autre, représentent le groupe cyclopentadiényle, tétraméthylcyclopentadiényle, méthylcyclopentadiényle, méthyl-tert-butylcyclopentadiényle, tert-butylcyclopentadiényle, isopropylcyclopentadiényle, diméthylcyclopentadiényle, triméthylcyclopentadiényle, triméthyléthylcyclopentadiényle, phénylcyclopentadiényle, diphénylcyclopentadiényle, indényle, 2-méthylindényle, 2-éthylindényle, 3-méthylindényle, 3-tert-butylindényle, 3-triméthylsilylindényle, 2-méthyl-4-phénylindényle, 2-éthyl-4-phénylindényle, 2-méthyl-4-naphtyl-indényle, 2-méthyl-4-isopropyl-indényle, 4,5-benzo-indényle, 2-méthyl-4,5-benzo-indényle, 2-méthylα-acénaphtindényle, 2-méthyl-4,6-diisopropylindényle, fluorényle, 4-méthylfluorényle ou 2,7-di-tert-butylfluorényle.

**5.** Procédé pour la préparation d'un copolymère de cyclo-oléfine par polymérisation d'au moins une oléfine cyclique et d'au moins une oléfine acyclique, en présence d'un catalyseur contenant au moins un composé métallocène de formule (II)

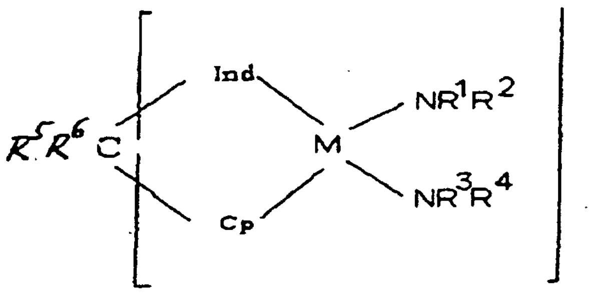

II

dans laquelle Cp représente un groupe cyclopentadiène substitué ou non substitué, Ind signifie indényle substitué ou non substitué, les radicaux $R^5$ et $R^6$, indépendamment l'un de l'autre, sont identiques ou différents et représentent un atome d'hydrogène ou un radical hydrocarboné en $C_1$-$C_{30}$ et n est égal à 1, 2, 3 ou 4, M est un métal de transition tétravalent et $R^1$, $R^2$, $R^3$ et $R^4$, indépendamment les uns des autres, identiques ou différents, représentent un atome d'hydrogène ou un radical hydrocarboné en $C_1$-$C_{20}$.

**6.** Procédé selon la revendication 4, dans lequel Cp représente le radical cyclopentadiényle, tétraméthylcyclopentadiényle, méthylcyclopentadiényle, méthyl-tert-butylcyclopentadiényle, tert-butyl-cyclopentadiényle, isopropylcyclopentadiényle, diméthylcyclopentadiényle, triméthylcyclopentadiényle, triméthyléthylcyclopentadiényle, phénylcyclopentadiényle, diphénylcyclopentadiényle, indényle, 2-méthylindényle, 2-éthylindényle, 3-méthylindényle, 3-tert-butylindényle, 3-triméthylsilylindényle, 2-méthyl-4-phénylindényle, 2-éthyl-4-phénylindényle, 2-méthyl-4-naphtyl-indényle, 2-méthyl-4-isopropylindényle, 4,5-benzo-indényle, 2-méthyl-4,5-benzo-indényle, 2-méthyl-α-acénaphtindényle, 2-méthyl-4,6-diisopropylindényle, fluorényle, 4-méthylfluorényle ou 2,7-di-tert.-butylfluorényle et Ind signifie le radical indényle, 2-méthylindényle, 2-éthylindényle, 3-méthylindényle, 3-tert-butylindényle, 3-triméthylsilylindényle, 2-méthyl-4-phénylindényle, 2-éthyl-4-phénylindényle, 2-méthyl-4-naphtyl-indényle, 2-méthyl-4-isopropyl-indényle, 4,5-benzo-indényle, 2-méthyl-4,5-benzoindényle, 2-méthyl-α-acénaphtindényle ou 2-méthyl-4,6-diisopropylindényle.

**7.** Procédé selon une ou plusieurs des revendications 1 à 6, dans lequel le catalyseur contient en outre au moins un co-catalyseur.

**8.** Procédé selon la revendication 7, dans lequel le co-catalyseur est un composé contenant de l'aluminium et/ou un composé contenant du bore.

**9.** Procédé selon la revendication 8, dans lequel le co-catalyseur est un aluminoxane.

**10.** Procédé selon une ou plusieurs des revendications 1 à 9, dans lequel le composé métallocène de formule I signifie l'un des composés suivants :

bis (diméthylamido) [$\eta^5$:$\eta^5$-2,2-(cyclopentadiényl)(indényl)propylidène)]-zirconium
bis (diméthylamido) [$\eta^5$:$\eta^5$-2,2- (cyclopentadiényl)(indényl)propylidène)]-hafnium
bis (diméthylamido) [$\eta^5$:$\eta^5$-2,2-(cyclopentadiényl)(fluorényl)propylidène)]-zirconium
bis (diméthylamido) [$\eta^5$:$\eta^5$-2,2-(cyclopentadiényl)(fluorényl)propylidène)]-hafnium
bis(diméthylamido) [$\eta^5$:$\eta^5$-2,2-(fluorényl)(indényl)propylidène)]zirconium

bis (diméthylamido) [$\eta^5$:$\eta^5$-2,2-(fluorényl)(indényl)propylidène)]hafnium
bis (diméthylamido) [$\eta^5$:$\eta^5$-2,2-(méthylcyclopentadiényl)(indényl)propylidène)]zirconium
bis( diméthylamido) [$\eta^5$:$\eta^5$-2,2-(méthylcyclopentadiényl)(fluorényl)propylidène)]-zirconium
bis (diméthylamido) [$\eta^5$:$\eta^5$-2,2-(fluorényl)(2-méthylindényl)propylidène)]-zirconium
bis (diméthylamido)[$\eta^5$:$\eta^5$-2,2- (tétraméthylcyclopentadiényl)(indényl)-propylidène)]zirconium
bis(diméthylamido)[$\eta^5$:$\eta^5$-2,2-(tétraméthylcyclopentadiényl)(fluorényl)-propylidène)]-zirconium
bis (diméthylamido)[$\eta^5$:$\eta^5$-2,2-(fluorényl)(2-éthylindényl)propylidène)]-zirconium
bis (diméthylamido) [$\eta^5$:$\eta^5$-2,2-(cyclopentadiényl)(2-méthylindényl)-propylidène)]-zirconium
bis(diméthylamido)[$\eta^5$:$\eta^5$-2,2-(cyclopentadiényl)(2-éthylindényl)-propylidène)]-zirconium
bis(diméthylamido)[$\eta^5$:$\eta^5$-2,2-(cyclopentadiényl)(3-triméthylsilyl)-propylidène)]-zirconium
bis(diméthylamido)[$\eta^5$:$\eta^5$-2,2-(méthylcyclopentadiényl)(2-méthylindényl)-propylidène)]zirconium
bis(diméthylamido)[$\eta^5$:$\eta^5$-2,2-(méthylcyclopentadiényl)(2-éthylindényl)-propylidène)]zirconium
bis(diméthylamido)[$\eta^5$:$\eta^5$-2,2-(méthylcyclopentadiényl)(3-triméthylsilylindényl)propylidène)]zirconium
bis(diméthylamido)[diméthylsilanediyl($\eta^5$:$\eta^5$-(cyclopentadiényl)(indényl)]-zirconium
bis(diméthylamido)[diméthylsilanediyl($\eta^5$:$\eta^5$-(fluorényl)(indényl)]-zirconium
bis(diméthylamido)[diméthylsilanediyl($\eta^5$:$\eta^5$-(méthylcyclopentadiényl)(indényl)]-zirconium
bis(diméthylamido)[diméthylsilanediyl($\eta^5$:$\eta^5$-(méthylcyclopentadiényl)(fluorényl)]-zirconium
bis (diméthylamido) [diméthylsilanediyl($\eta^5$:$\eta^5$-2,2-(fluorényl)(2-méthyl-indényl)]-zirconium
bis(diméthylamido) [diméthylsilanediyl($\eta^5$:$\eta^5$-2,2-(tétraméthylcyclopentadiényl)(indényl))]-zirconium
bis (diméthylamido)[diméthylsilanediyl($\eta^5$:$\eta^5$-2,2-(tétraméthylcyclopentadiényl)(fluorényl)]-zirconium
bis (diméthylamido)[diméthylsilanediyl($\eta^5$:$\eta^5$-2,2-(fluorényl)(2-éthylindényl))]-zirconium
bis(diméthylamido)[diméthylsilanediyl(2,2-(cyclopentadiényl)(2-méthyl-indényl)]-zirconium
bis (diméthylamido) [diméthylsilanediyl($\eta^5$:$\eta^5$-2,2-(cyclopentadiényl)(2-éthyl-indényl]-zirconium
bis (diméthylamido) [diméthylsilanediyl($\eta^5$:$\eta^5$-2,2-(cyclopentadiényl)(triméthylsilylindényl))]-zirconium
bis (diméthylamido) [diméthylsilanediyl($\eta^5$:$\eta^5$-2,2-(méthylcyclopentadiényl)-(2-méthylindényl))]-zirconium
bis (diméthylamido)[diméthylsilanediyl($\eta^5$:$\eta^5$-2,2-(méthylcyclopentadiényl)(2-éthylindényl))]-zirconium
bis (diméthylamido) [diméthylsilanediyl($\eta^5$:$\eta^5$-2,2-(méthylcyclopentadiényl)(3-triméthylsilylindényl))]-zirconium
stanntétraylbis[($\eta^5$:$\eta^5$-bis(cyclopentadiényl)-bis-(diméthylamido)-zirconium]
bis (diméthylamido)[$\eta^5$:$\eta^5$-2,2-(cyclopentadiényl)(indényl)propylidène)]-zirconium
bis (diméthylamido) [$\eta^5$:$\eta^5$-2,2-(cyclopentadiényl)(indényl)propylidène)]-hafnium
bis (diméthylamido) [$\eta^5$:$\eta^5$-2,2-(fluorényl)(indényl)-propylidène]-zirconium
bis (diméthylamido) [$\eta^5$:$\eta^5$-2,2-(fluorényl)(indényl)-propylidène)]-hafnium
bis (diméthylamido) [$\eta^5$:$\eta^5$-2,2-(méthylcyclopentadiényl)-(indényl)-propylidène)]-zirconium
bis (diméthylamido) [$\eta^5$:$\eta^5$-2,2-(fluorényl)(2-méthylindényl)propylidène)]-zirconium
bis (diméthylamido)[$\eta^5$:$\eta^5$-2,2-(tétraméthylcyclopentadiényl)(indényl)-propylidène)]-zirconium
bis (diméthylamido) [$\eta^5$:$\eta^5$-2,2-(fluorényl)(2-éthylindényl)propylidène)]-zirconium
bis (diméthylamido)[$\eta^5$:$\eta^5$-2,2-(cyclopentadiényl)(2-méthylindényl)propylidène)]-zirconium
bis(diméthylamido)[$\eta^5$:$\eta^5$-2,2-(cyclopentadiényl)(2-éthylindényl)propylidène)]-zirconium
bis(diméthylamido)[$\eta^5$:$\eta^5$-2,2-(cyclopentadiényl)(3-triméthylsilylindényl)-propylidène]-zirconium
bis(diméthylamido)[$\eta^5$:$\eta^5$-2,2-(méthylcyclopentadiényl)(2-méthylindényl)-propylidène]-zirconium
bis (diméthylamido) [$\eta^5$:$\eta^5$-2,2-(méthylcyclopentadiényl)(2-éthylindényl)-propylidène]-zirconium
bis (diméthylamido) [$\eta^5$:$\eta^5$-2,2-(méthylcyclopentadiényl)(3-triméthylsilylindényl)-propylidène]-zirconium
bis(diméthylamido)[$\eta^5$:$\eta^5$-2,2-(2-méthylindényl)(indényl)-propylidène]-zirconium
bis(diméthylamido)[$\eta^5$:$\eta^5$-2,2-bis(indényl)propylidène)]-zirconium.

**11.** Procédé selon une ou plusieurs des revendications 1 à 10, dans lequel M représente le titane, le zirconium ou l'hafnium.

**12.** Procédé selon une ou plusieurs des revendications 1 à 11, dans lequel $R^1$, $R^2$, $R^3$ et $R^4$ ont la même signification et représentent un groupe alkyle en $C_1$-$C_{20}$ ou aryle en $C_6$-$C_{14}$.

**13.** Procédé selon une ou plusieurs des revendications 1 à 12, dans lequel $R^1$, $R^2$, $R^3$ et $R^4$ représentent le groupe méthyle.

**14.** Procédé selon une ou plusieurs des revendications 1 à 13, dans lequel l'oléfine cyclique est une oléfine polycyclique de formules VI à XI.

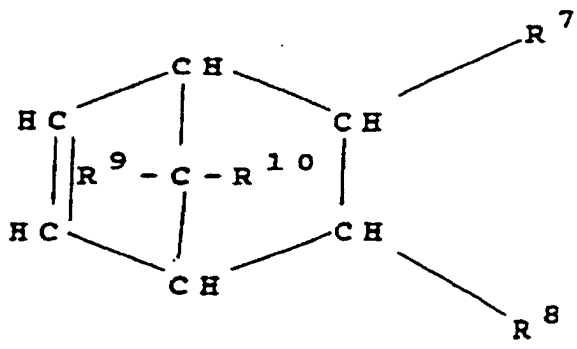

(VI)

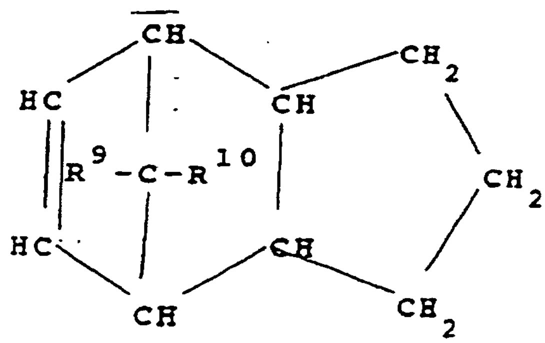

(VII)

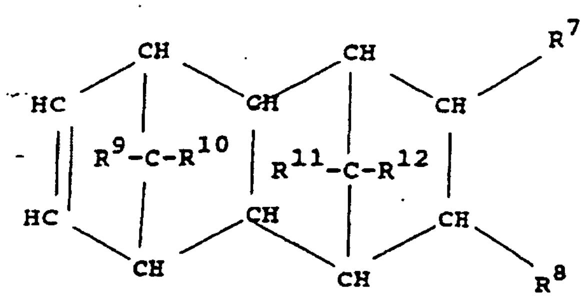

(VIII)

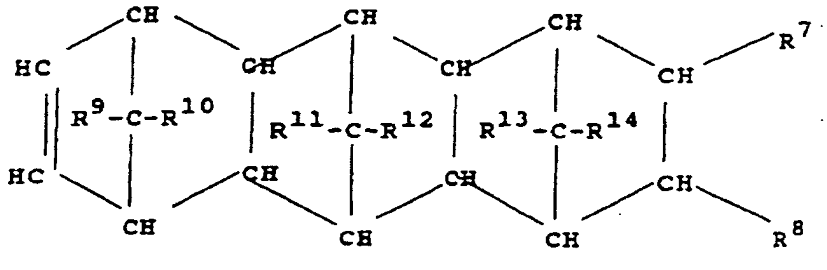

(IX)

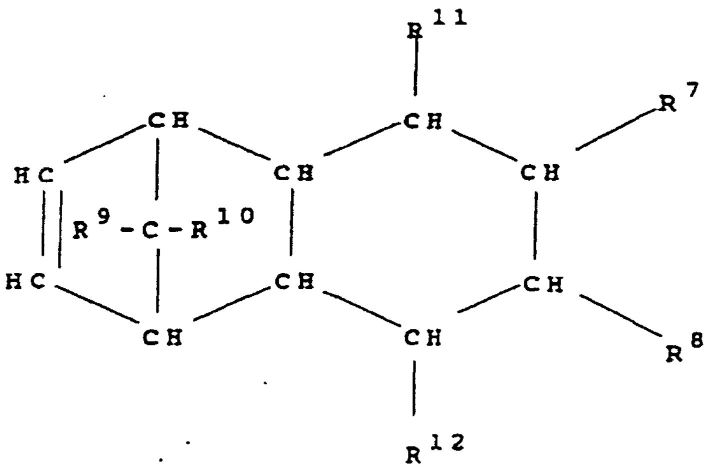

(X)

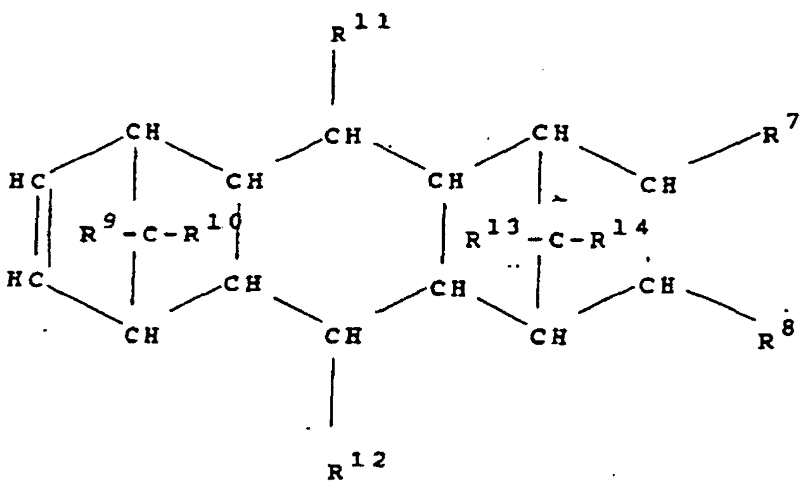

(XI)

dans lesquelles $R^7$, $R^8$, $R^9$, $R^{10}$, $R^{11}$, $R^{12}$, $R^{13}$ et $R^{14}$ sont identiques ou différents et représentent un atome d'hydrogène ou un radical hydrocarboné en $C_1$-$C_{20}$ tel qu'alkyle en $C_1$-$C_8$ ou aryle en $C_6$-$C_{10}$, ou deux ou plus de deux radicaux $R^7$-$R^{14}$ forment ensemble un système cyclique en $C_4$-$C_{40}$, les mêmes radicaux $R^7$-$R^{14}$ dans les diverses formules pouvant avoir une signification différente.

**15.** Procédé selon une ou plusieurs des revendications 1 à 14, dans lequel l'oléfine acyclique est une 1-oléfine ayant de 1 à 20 atomes de carbone.

**16.** Procédé selon une ou plusieurs des revendications 1 à 15, dans lequel l'oléfine acyclique est une 1-oléfine de formule XII

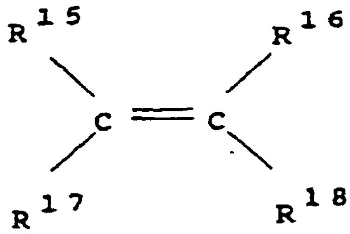

(XII)

dans laquelle $R^{15}$, $R^{16}$, $R^{17}$ et $R^{18}$ sont identiques ou différents et représentent un atome d'hydrogène ou un radical hydrocarboné en $C_1$-$C_{20}$.

**17.** Procédé selon une ou plusieurs des revendications 1 à 16, dans lequel l'oléfine cyclique est une oléfine de formule VI ou VIII et l'oléfine acyclique est l'éthylène.

**18.** Procédé selon une ou plusieurs des revendications 1 à 17, dans lequel l'oléfine cyclique est le norbornène.

**19.** Procédé selon une ou plusieurs des revendications 1 à 18, dans lequel on utilise en outre une ou plusieurs des oléfines monocycliques de formule XIII

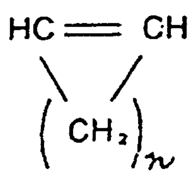

(XIII)

dans laquelle n est un nombre allant de 2 à 10.

**20.** Procédé selon la revendication 19, dans lequel l'oléfine monocyclique est un cyclopentène qui peut être substitué.